# EUROPEAN PATENT APPLICATION

(11) **EP 4 848 805 A1**
(43) Date of publication of application: **02.12.2026**
(21) Application number: 25751216.0
(22) Date of filing: 21.01.2025
(51) Int. Cl.: H04W 28/24

(54) **COMMUNICATION METHOD, APPARATUS AND SYSTEM, AND STORAGE MEDIUM AND PROGRAM PRODUCT**

(30) Priority: 08.02.2024 CN 202410179465
(71) Applicant: Huawei Technologies Co., Ltd., Shenzhen, Guangdong 518129 (CN)
(72) Inventor: LI, Kuikui, Shenzhen, Guangdong 518129 (CN)
(74) Representative: Huawei European IPR
(86) International application number: PCT/CN2025/073790
(87) International publication number: WO 2025/167614

(57) **Abstract**

A communication method, apparatus, and system, a storage medium, and a program product are provided. The communication method includes: obtaining a first quality of service QoS parameter and a second QoS parameter, where the first QoS parameter indicates a QoS requirement corresponding to a communication link between two communicatively connected second function entities of different types, and the second QoS parameter indicates a QoS requirement of a service; and obtaining a new second QoS parameter based on the first QoS parameter and the second QoS parameter. In embodiments of this application, a QoS parameter of the service is adjusted to obtain a new QoS parameter, so that after a DRB is established based on the new QoS parameter, the QoS requirement of the service can be met, thereby improving user experience.

## Description

This application claims priority to Chinese Patent Application No. 202410179465.1, filed with the China National Intellectual Property Administration on February 8, 2024 and entitled "COMMUNICATION METHOD, APPARATUS, AND SYSTEM, STORAGE MEDIUM, AND PROGRAM PRODUCT", which is incorporated herein by reference in its entirety.

### TECHNICAL FIELD

This application relates to the communication field, and in particular, to a communication method, apparatus, and system, a storage medium, and a program product.

### BACKGROUND

A 4th generation (4th generation, 4G) mobile network base station is split into two parts: a baseband unit (baseband Unit, BBU) and a remote radio unit (remote radio unit, RRU) for deployment in a lower-layer split manner. A 5th generation (5th generation, 5G) mobile network base station is split into two function entities: a central unit (central unit, CU) and a distributed unit (distributed unit, DU) in a higher-layer split manner.

Currently, a 5G base station may be divided into different function entities, and communication between the different function entities affects quality of service (quality of service, QoS) of a service to some extent. As a result, the QoS of the service cannot meet its QoS requirements.

### SUMMARY

This application provides a communication method, apparatus, and system, a storage medium, and a program product. A QoS parameter of a service is adjusted to obtain a new QoS parameter, so that after a DRB is established based on the new QoS parameter, a QoS requirement of the service can be met, thereby improving user experience.

To achieve the foregoing objectives, this application uses the following technical solutions.

According to a first aspect, a communication method is provided. The method is applied to a first function entity side, for example, a first function entity or a component (for example, a circuit, a chip, or a chip system) in the first function entity. The method may include: obtaining a first QoS parameter and a second QoS parameter, where the first QoS parameter indicates a QoS requirement corresponding to a communication link between two communicatively connected second function entities of different types, and the second QoS parameter indicates a QoS requirement of a service; and obtaining a new second QoS parameter based on the first QoS parameter and the second QoS parameter.

In this application, a QoS parameter of the service is adjusted to obtain a new QoS parameter, so that after a DRB is established based on the new QoS parameter, the QoS requirement of the service can be met, thereby improving user experience.

In a possible design, the first QoS parameter is obtained in at least one of the following manners: determining, based on a first correspondence and a target policy, the first QoS parameter corresponding to the target policy, where the first correspondence indicates an association relationship between the first QoS parameter and a candidate function split manner, the candidate function split manner is a communication function split manner of the two communicatively connected second function entities of different types, the candidate function split manner includes a target function split manner, and the target function split manner has an association relationship with the target policy; or obtaining the first QoS parameter based on first information, where the first information indicates a network communication status corresponding to a first interface, and the first interface is a communication interface between the two communicatively connected second function entities of different types.

This application provides a plurality of manners of determining the first QoS parameter, so that the first function entity can determine the first QoS parameter in a proper manner based on different requirements, thereby improving universality.

In a possible design, the first function entity is integrated into the second function entity.

This application is applicable to a scenario in which the first function entity is integrated into the second function entity, so that in this scenario, a QoS parameter of the service can be adjusted, and a DRB can be established based on a new QoS parameter to meet the QoS requirement of the service, thereby improving user experience.

In a possible design, the first function entity is integrated into a central unit CU, and the method further includes: initiating a data radio bearer establishment process based on the new second QoS parameter.

This application is applicable to a scenario in which the first function entity is integrated into the CU, so that in this scenario, the CU can establish a DRB based on a new QoS parameter to meet the QoS requirement of the service, thereby improving user experience.

In a possible design, the first function entity and the second function entity are function entities that are independent of each other.

This application is applicable to a scenario in which the first function entity and the second function entity are independent of each other, so that in this scenario, a QoS parameter of the service can be adjusted, and a DRB can be established based on a new QoS parameter to meet the QoS requirement of the service, thereby improving user experience.

In a possible design, the first function entity and a CU are independent of each other, and the method further includes: sending the new second QoS parameter to the CU or a core network function network element.

This application is applicable to a scenario in which the first function entity and the CU are independent of each other, so that in this scenario, the CU can establish a DRB based on a new QoS parameter to meet the QoS requirement of the service, thereby improving user experience.

In a possible design, the second function entity is a function entity in a radio access network RAN, a core network, or a network management domain.

In this application, when the second function entity includes different communication functions, a QoS parameter of the service can be adjusted, thereby improving universality.

In a possible design, the second function entity is the function entity in the RAN, and the second function entity includes at least one of the following function entities: a CU, a DU, or a radio unit (radio unit, RU).

This application provides a plurality of forms of the second function entity, so that a QoS parameter of the service can be adjusted in any possible form, to meet the QoS requirement of the service, thereby improving user experience.

In a possible design, the method further includes: sending second information, where the second information indicates the first QoS parameter.

In this application, the first function entity indicates the first QoS parameter to the second function entity, so that the second function entity can configure, based on the first QoS parameter, a communication resource that meets a corresponding QoS requirement.

In a possible design, the second information is the first QoS parameter, or the second information is information indicating the target function split manner; and the candidate function split manner includes the target function split manner, and the candidate function split manner is the communication function split manner of the two communicatively connected second function entities of different types.

This application provides a plurality of manners of indicating the first QoS parameter to the second function entity, so that the first function entity can flexibly select, based on an actual situation, a proper manner to indicate the first QoS parameter to the second function entity.

In a possible design, the second information is information indicating the target policy, and the method further includes: sending at least one candidate function split manner and the first QoS parameter corresponding to the candidate function split manner.

In this application, the first correspondence is preconfigured for the second function entity, so that the first function entity indirectly indicates the first QoS parameter to the second function entity by using the target policy, thereby reducing resource consumption for sending the second information.

In a possible design, the method further includes: determining the target policy based on one or more of the first information corresponding to the first interface, fourth information, and third information corresponding to the second function entity, where the third information indicates a processing resource status corresponding to the second function entity, and the fourth information indicates a second QoS parameter corresponding to at least one service.

In this application, the target policy is comprehensively determined based on dimensions such as a network communication status of a communication interface, a processing resource status of a function entity, and a QoS requirement of a service. A QoS parameter of the service may be adjusted when communication functions of different function entities are assigned by using the target policy, to meet the QoS requirement of the service, thereby improving user experience.

In a possible design, the two second function entities of different types corresponding to the first interface include a first target entity and a second target entity. The method further includes: obtaining the first information from the second function entity, where the first information includes at least one of the following parameters: a bandwidth resource of the first interface, a transmission delay of the first interface, a packet loss rate of the first interface, reliability of the first interface, an internal processing delay of the first target entity, or an internal processing delay of the second target entity.

This application provides a plurality of possible parameters included in the first information, so that the first function entity determines an appropriate first QoS parameter based on one or more parameters in the first information.

In a possible design, the method further includes: obtaining the third information from the second function entity, where the third information includes at least one of the following parameters: processor utilization, memory utilization, or disk utilization.

This application provides a plurality of possible parameters included in the third information, so that the first function entity determines an appropriate target policy based on the parameters in the third information.

In a possible design, the method further includes: obtaining the fourth information from the second function entity and/or a core network device, where the fourth information includes at least one of the following parameters: a packet delay budget (packet delay budget, PDB), a guaranteed bit rate (guaranteed bit rate, GBR), or a packet error rate (packet error rate, PER).

This application provides a plurality of possible parameters included in the fourth information, so that the first function entity determines an appropriate target policy based on the parameters in the fourth information, to meet a plurality of possible QoS requirements.

According to a second aspect, a communication method is provided. The method is applied to a third function entity side, for example, a third function entity or a component (for example, a circuit, a chip, or a chip system) in the third function entity. The method may include: receiving a new second QoS parameter from a first function entity, where the new second QoS parameter is obtained based on a first QoS parameter and a second QoS parameter, the first QoS parameter indicates a QoS requirement corresponding to a communication link between two communicatively connected second function entities of different types, and the second QoS parameter indicates a QoS requirement of a service; and performing a first operation based on the new second QoS parameter, where the first operation includes any one of the following: establishing a data radio bearer; or sending the new second QoS parameter.

In this application, a QoS parameter of the service is adjusted to obtain a new QoS parameter, so that after a DRB is established based on the new QoS parameter, the QoS requirement of the service can be met, thereby improving user experience.

In a possible design, the third function entity is a central unit CU, and receiving the new second QoS parameter from the first function entity includes: receiving the new second QoS parameter sent by the first function entity; or receiving the new second QoS parameter forwarded by a core network element.

In a possible design, performing the first operation based on the new second QoS parameter includes: establishing the data radio bearer based on the new second QoS parameter.

In a possible design, the third function entity is a core network element, and receiving the new second QoS parameter from the first function entity includes: receiving the new second QoS parameter sent by the first function entity.

In a possible design, performing the first operation based on the new second QoS parameter includes: sending the new second QoS parameter.

In a possible design, the first QoS parameter is obtained in at least one of the following manners: determining, based on a first correspondence and a target policy, the first QoS parameter corresponding to the target policy, where the first correspondence indicates an association relationship between the first QoS parameter and a candidate function split manner, the candidate function split manner is a communication function split manner of the two communicatively connected second function entities of different types, the candidate function split manner includes a target function split manner, and the target function split manner has an association relationship with the target policy; or obtaining the first QoS parameter based on first information, where the first information indicates a network communication status corresponding to a first interface, and the first interface is a communication interface between the two communicatively connected second function entities of different types.

In a possible design, the first function entity is integrated into the second function entity.

In a possible design, the first function entity and the second function entity are function entities that are independent of each other.

In a possible design, the second function entity is a function entity in a radio access network RAN, a core network, or a network management domain.

In a possible design, the second function entity is the function entity in the RAN, and the second function entity includes at least one of the following function entities: a CU, a DU, or an RU.

In a possible design, the second function entity and the third function entity are a same function entity.

According to a third aspect, a communication method is provided. The method is applied to a second function entity side, for example, a second function entity or a component (for example, a circuit, a chip, or a chip system) in the second function entity. The method may include: receiving second information, where the second information indicates a first QoS parameter, and the first QoS parameter indicates a QoS requirement corresponding to a communication link between two communicatively connected second function entities of different types; and configuring a communication resource of the second function entity based on the first QoS parameter, where a service transmitted on the communication resource corresponds to a second QoS parameter, and the first QoS parameter is further used to obtain a new second QoS parameter via a first function entity based on the second QoS parameter.

In this application, the second function entity may configure the communication resource of the second function entity based on the first QoS parameter, to meet the QoS requirement of the service, thereby improving user experience.

According to a fourth aspect, a communication system is provided, and includes a first function entity, a third function entity, and a core network element. The first function entity is configured to obtain a first QoS parameter, where the first QoS parameter indicates a QoS requirement corresponding to a communication link between two communicatively connected second function entities of different types. The core network element is configured to send a second QoS parameter to the first function entity, where the second QoS parameter indicates a QoS requirement of a service. The first function entity is further configured to obtain a new second QoS parameter based on the first QoS parameter and the second QoS parameter. The first function entity is integrated into the third function entity, and the third function entity is configured to perform the first operation based on the new second QoS parameter; or the first function entity and the third function entity are independently deployed, the first function entity is further configured to send the new second QoS parameter to the third function entity, and the third function entity is further configured to perform the first operation based on the new second QoS parameter, where the first operation includes any one of the following: establishing a data radio bearer; or sending the new second QoS parameter.

In this application, a QoS parameter of the service is adjusted to obtain a new QoS parameter, so that after a DRB is established based on the new QoS parameter, the QoS requirement of the service can be met, thereby improving user experience.

In a possible design, the first function entity is further configured to determine, based on a first correspondence and a target policy, the first QoS parameter corresponding to the target policy, where the first correspondence indicates an association relationship between the first QoS parameter and a candidate function split manner, the candidate function split manner is a communication function split manner of the two communicatively connected second function entities of different types, the candidate function split manner includes a target function split manner, and the target function split manner has an association relationship with the target policy. Alternatively, the first function entity is further configured to obtain the first QoS parameter based on first information, where the first information indicates a network communication status corresponding to a first interface, and the first interface is a communication interface between the two communicatively connected second function entities of different types.

In a possible design, the first function entity is integrated into the second function entity.

In a possible design, the first function entity is integrated into a central unit CU, and the first function entity is further configured to initiate a data radio bearer establishment process based on the new second QoS parameter.

In a possible design, the first function entity and the second function entity are function entities that are independent of each other.

In a possible design, the first function entity and a CU are independent of each other, and the first function entity is further configured to send the new second QoS parameter to the CU or a core network function network element.

In a possible design, the second function entity is a function entity in a radio access network RAN, a core network, or a network management domain.

In a possible design, the second function entity is the function entity in the RAN, and the second function entity includes at least one of the following function entities: a CU, a DU, or an RU.

In a possible design, the system further includes a second function entity. The first function entity is further configured to send second information to the second function entity, where the second information indicates the first QoS parameter. The second function entity is configured to configure a communication resource of the second function entity based on the first QoS parameter.

In a possible design, the second information is the first QoS parameter, or the second information is information indicating the target function split manner; and the candidate function split manner includes the target function split manner, and the candidate function split manner is the communication function split manner of the two communicatively connected second function entities of different types.

In a possible design, the second information is information indicating the target policy, and the first function entity is further configured to send at least one candidate function split manner and the first QoS parameter corresponding to the candidate function split manner to the second function entity.

In a possible design, the first function entity is further configured to determine the target policy based on one or more of the first information corresponding to the first interface, fourth information, and third information corresponding to the second function entity, where the third information indicates a processing resource status corresponding to the second function entity, and the fourth information indicates a second QoS parameter corresponding to at least one service.

In a possible design, the two second function entities of different types corresponding to the first interface include a first target entity and a second target entity. The first function entity is further configured to obtain the first information from the second function entity, where the first information includes at least one of the following parameters: a bandwidth resource of the first interface, a transmission delay of the first interface, a packet loss rate of the first interface, reliability of the first interface, an internal processing delay of the first target entity, or an internal processing delay of the second target entity.

In a possible design, the first function entity is further configured to obtain the third information from the second function entity, where the third information includes at least one of the following parameters: processor utilization, memory utilization, or disk utilization.

In a possible design, the first function entity is further configured to obtain the fourth information from the second function entity and/or a core network device, where the fourth information includes at least one of the following parameters: a PDB, a GBR, or a PER.

According to a fifth aspect, a communication apparatus is provided. The communication apparatus is configured to implement various communication methods in the first aspect, the second aspect, and/or the third aspect. The communication apparatus includes a corresponding module, unit, or means (means) for implementing the foregoing communication method. The module, unit, or means may be implemented by hardware, software, or hardware executing corresponding software. The hardware or the software includes one or more modules or units corresponding to the foregoing functions.

According to a sixth aspect, a communication apparatus is provided. The communication apparatus includes at least one processor, configured to support the communication apparatus in implementing the function in any one of the foregoing aspects.

In a possible design, the communication apparatus further includes a memory, and the memory is configured to store program instructions and/or data necessary for the communication apparatus.

In a possible design, the communication apparatus further includes a communication interface. The communication interface is configured to: receive and/or send a signal, or the communication interface is configured to perform communication between the processor and another apparatus or component.

According to a seventh aspect, a communication apparatus is provided, and includes at least one processor and a communication interface. The communication interface is configured to: receive and/or send a signal, and the processor is configured to enable the communication method according to any one of the foregoing aspects to be performed.

According to an eighth aspect, a communication apparatus is provided. The communication apparatus includes at least one processor and a memory. The memory is configured to store computer instructions, and when the processor executes the instructions, the communication apparatus is enabled to perform the communication method according to any one of the foregoing aspects.

According to a ninth aspect, a chip system is provided. The chip system includes a processor and an input/output port. The processor is configured to implement a processing function related to the communication method according to any one of the foregoing aspects, and the input/output port is configured to implement a transceiver function related to the communication method according to any one of the foregoing aspects.

In a possible design, the chip system further includes a memory, and the memory is configured to store program instructions and data for implementing a function related to the communication method according to any one of the foregoing aspects.

The chip system may include a chip, or may include a chip and another discrete component.

According to a tenth aspect, a computer-readable storage medium is provided. The computer-readable storage medium stores computer instructions. When the computer instructions are run on a computer, the computer is enabled to perform the communication method according to any design in any one of the foregoing aspects.

According to an eleventh aspect, a computer program product is provided. The computer program product includes a computer program or instructions. When the computer program or the instructions are run on a computer, the computer is enabled to perform the communication method according to any design in any one of the foregoing aspects.

### BRIEF DESCRIPTION OF DRAWINGS

FIG. 1 is an example diagram of an architecture of a communication system according to an embodiment of this application;
FIG. 2 is a diagram of an architecture of a 5G radio access network according to an embodiment of this application;
FIG. 3 is a diagram of function split of an access network device according to an embodiment of this application;
FIG. 4 is a diagram of delay and bandwidth requirements of different split manners according to an embodiment of this application;
FIG. 5 is a diagram of a communication connection according to an embodiment of this application;
FIG. 6 is a diagram of a communication scenario according to an embodiment of this application;
FIG. 7 is a diagram of a communication method according to an embodiment of this application;
FIG. 8 is a diagram of a candidate function split manner according to an embodiment of this application;
FIG. 9 is a diagram of another candidate function split manner according to an embodiment of this application;
FIG. 10 is a diagram of still another candidate function split manner according to an embodiment of this application;
FIG. 11 is a diagram of a network structure of a first function entity according to an embodiment of this application;
FIG. 12 is a diagram of a connection between a first function entity and a second function entity according to an embodiment of this application;
FIG. 13 is a diagram of a network structure of another first function entity according to an embodiment of this application;
FIG. 14 is a diagram of a network structure of still another first function entity according to an embodiment of this application;
FIG. 15 is a diagram of another communication method according to an embodiment of this application;
FIG. 16 is a diagram of a network structure of yet another first function entity according to an embodiment of this application;
FIG. 17 is a diagram of still another communication method according to an embodiment of this application;
FIG. 18 is a diagram of yet another communication method according to an embodiment of this application;
FIG. 19 is a diagram of a communication apparatus according to an embodiment of this application; and
FIG. 20 is a diagram of another communication apparatus according to an embodiment of this application.

### DESCRIPTION OF EMBODIMENTS

A network architecture and a service scenario described in embodiments of this application are intended to describe the technical solutions in embodiments of this application more clearly, and do not constitute a limitation on the technical solutions provided in embodiments of this application. A person of ordinary skill in the art may know that with the evolution of the network architecture and the emergence of new service scenarios, the technical solutions provided in embodiments of this application are also applicable to similar technical problems.

In the specification and accompanying drawings of embodiments of this application, terms such as "first" and "second" are intended to distinguish between different objects or distinguish between different processing on a same object. Terms such as "first" and "second" may distinguish between same items or similar items with basically same functions and purposes. For example, a first device and a second device are merely intended to distinguish between different devices, and do not limit a sequence thereof. A person skilled in the art may understand that the terms such as "first" and "second" do not limit a quantity or an execution sequence, and the terms such as "first" and "second" do not indicate a definite difference.

"At least one" means one or more, and "a plurality of" means two or more.

In descriptions of embodiments of this application, unless otherwise stated, "/" means an "or" relationship between associated objects, for example, A/B may represent A or B. In embodiments of this application, "and/or" describes only an association relationship between associated objects, and indicates that three relationships may exist. For example, A and/or B may represent three cases: Only A exists, both A and B exist, and only B exists, where A and B may be singular or plural.

In the descriptions of embodiments of this application, "a plurality of" means two or more unless otherwise specified. "At least one of the following items (pieces)" or a similar expression thereof refers to any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, terms "include", "have", and any other variants thereof mentioned in descriptions of embodiments of this application are intended to cover a non-exclusive inclusion. For example, a process, a method, a system, a product, or a device that includes a series of steps or units is not limited to the listed steps or units, but optionally further includes another unlisted step or unit, or optionally further includes another inherent step or unit of the process, the method, the product, or the device.

In embodiments of this application, the word such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It may be understood that an "embodiment" mentioned throughout this specification means that particular features, structures, or characteristics related to this embodiment are included in at least one embodiment in embodiments of this application. Therefore, embodiments in the entire specification are not necessarily a same embodiment. In addition, these particular features, structures, or characteristics may be combined in one or more embodiments by using any appropriate manner. It may be understood that sequence numbers of the foregoing processes do not mean execution sequences in embodiments of this application. The execution sequences of the processes should be determined based on functions and internal logic of the processes, and should not constitute any limitation on the implementation processes of embodiments of this application.

It may be understood that, in embodiments of this application, both "when" and "if" mean that corresponding processing is performed in an objective situation, are not intended to limit time, do not require a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

In embodiments of this application, unless otherwise specified, for same or similar parts of embodiments, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of embodiments of this application are not intended to limit the protection scope of embodiments of this application.

Collection, storage, use, processing, transmission, provision, disclosure, and the like of personal user information in the technical solutions of embodiments of this application all comply with related laws and regulations, and do not violate public order and good morals. For example, in the technical solutions in embodiments of this application, the personal user information is processed with user authorization. This applies throughout and will not be repeated below.

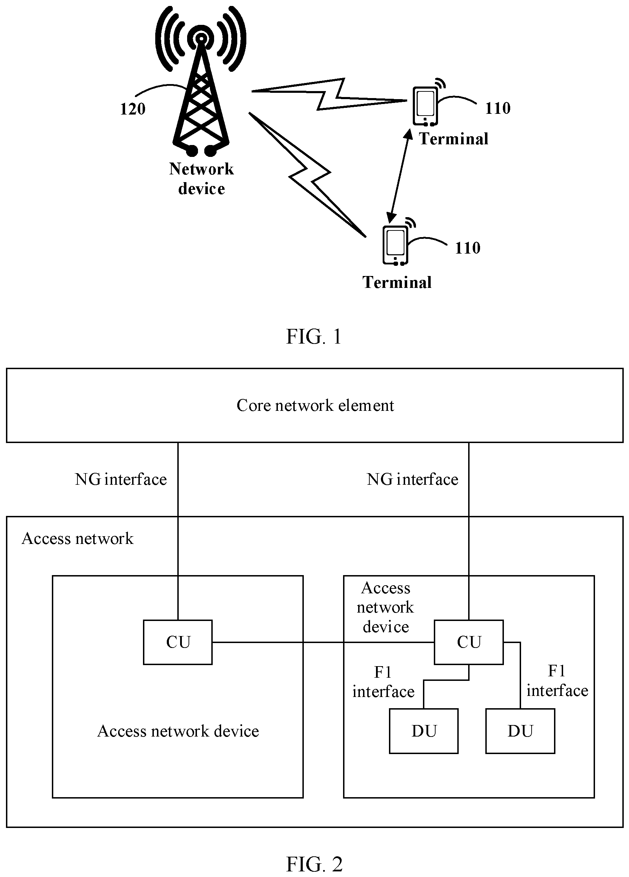

FIG. 1 is an example diagram of an architecture of a communication system according to an embodiment of this application.

As shown in FIG. 1, the communication system in this embodiment of this application may include at least one terminal 110 and a network device 120.

The terminal 110 and the network device 120 communicate with each other in a wireless manner. The network device 120 may be a radio access network device. A wired or wireless manner may be used for a connection between terminals and a connection between radio access network devices. FIG. 1 is merely a diagram. The communication system may further include another network device. For example, the communication system may further include a wireless relay device, a wireless backhaul device, and a core network device, which are not shown in FIG. 1. A connection relationship between devices is not limited to the foregoing enumerated manners.

The radio access network device may be a base station (base station), an evolved NodeB (evolved NodeB, eNodeB), a transmission reception point (transmission reception point, TRP), a next generation NodeB (next generation NodeB, gNodeB/gNB) in a 5G mobile communication system, a next generation base station in a 6th generation (6th generation, 6G) mobile communication system, a base station in a future mobile communication system, an access node in a Wi-Fi system, or the like; or may be a module or a unit that completes some functions of a base station, for example, may be a central unit (central unit, CU) or a distributed unit (distributed unit, DU). The radio access network device may be a macro base station, may be a micro base station or an indoor base station, or may be a relay node, a donor node, or the like. In some other embodiments, alternatively, the radio access network device may be an access network device in an open RAN (open RAN, O-RAN). In the O-RAN, a CU may be referred to as an open CU (open CU, O-CU), a DU may be referred to as an open DU (open DU, O-DU), and an RU may be referred to as an open RU (open RU, O-RU). A specific technology and a specific device form that are used by the radio access network device are not limited in embodiments of this application. The radio access network device is sometimes also referred to as a network device briefly. For ease of description, descriptions are provided below by using an example in which the radio access network device is a base station.

The terminal may also be referred to as a terminal device, user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, autonomous driving, telemedicine, a smart grid, smart furniture, smart office, smart wearable, smart transportation, and a smart city. The terminal device may be a mobile phone, a tablet computer, a computer with a wireless transceiver function, a wearable device, a vehicle, an uncrewed aerial vehicle, a helicopter, an airplane, a ship, a robot, a mechanical arm, a smart home device, or the like. A specific technology and a specific device form that are used by the terminal device are not limited in embodiments of this application.

The base station and the terminal may be fixed or movable. The base station and the terminal device may be deployed on land, including indoor, outdoor, handheld, or vehicle-mounted forms; or may be deployed on water; or may be deployed on airplanes, balloons, and artificial satellites in the air. Application scenarios of the base station and the terminal device are not limited in embodiments of this application.

Communication between the base station and the terminal, between the base stations, or between the terminals may be performed over a licensed spectrum, or may be performed over an unlicensed spectrum, or may be performed over both the licensed spectrum and the unlicensed spectrum. Communication may be performed over a spectrum below 6 gigahertz (gigahertz, GHz), or may be performed over a spectrum above 6 GHz, or may be performed over both the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in an application scenario of the foregoing terminal device, for example, a smart grid, industrial control, smart transportation, and a smart city. A function of a relay may also be performed by a module (for example, a chip or a modem) in the relay, or may be performed by an apparatus including the function of the relay. A function of the terminal may be performed by a module (for example, a chip or a modem) in the terminal, or may be performed by an apparatus including the function of the terminal.

A wireless communication system includes communication devices, and the communication devices may perform wireless communication through an air interface resource. The communication devices may include a network device and a terminal device, and the network device may also be referred to as a base station device. The air interface resource may include at least one of a time domain resource, a frequency domain resource, a code resource, and a spatial resource. The communication device may also be referred to as a communication apparatus.

The solutions provided in embodiments of this application may be applied to wireless communication between communication devices. The wireless communication may include wireless communication between a network device and a terminal, wireless communication between network devices, and wireless communication between terminals. In embodiments of this application, the term "wireless communication" may also be briefly referred to as "communication", and the term "communication" may also be described as "data transmission", "information transmission", or "transmission".

Embodiments of this application may be applied to possible communication links such as an uplink (uplink, UL), a downlink (downlink, DL), an access link, a backhaul (backhaul) link, and a sidelink (sidelink, SL). This is not limited in embodiments of this application. From the perspective of service scenarios, embodiments of this application are applicable to a plurality of scenarios, for example, an extended reality (extended reality, XR) service, an artificial intelligence (artificial intelligence, AI) service, and a large-capacity scenario. This is not limited in embodiments of this application. The SL may also be referred to as a sidelink, a side link, or the like. This is not limited in embodiments of this application.

A 4G base station may be divided into two parts: a BBU and an RRU. The BBU is connected to one or more RRUs through an optical fiber, metal cabling, or a microwave link. The BBU mainly performs centralized higher-layer processing on baseband signals. The RRU mainly receives and sends a baseband signal, and performs functions such as modulation and demodulation of a radio frequency signal, data processing, and power amplification. When the RRU is closer to an antenna, a feeder loss is smaller. In some cases, the RRU may also be referred to as a radio unit (radio unit, RU). In this case, the BBU can process baseband signals in a highly centralized manner. Therefore, compute resources can be deployed in a centralized manner, so that resource utilization is high and deployment costs are low. However, such lower-layer split has a high requirement on bandwidth of the fronthaul (fronthaul) link between the BBU and the RRU, and optical fiber deployment costs are high.

Therefore, to reduce pressure on the bandwidth of the fronthaul link and the deployment costs caused by the lower-layer split manner, in a 3rd generation partnership project (3rd generation partnership project, 3GPP) 5G radio access network, considering that a base station is split into two function entities such as a CU and a DU at a higher layer, a midhaul (midhaul) link between the CU and the DU has a lower requirement on network bandwidth. Therefore, the CU and the DU may be split. A 5G radio access network may also be referred to as a next generation radio access network (next generation radio access network, NG-RAN).

FIG. 2 shows an architecture of a 5G radio access network. For example, the access network device may be a gNB, and the gNB may include two parts: a CU and a DU. Certainly, there may be one or more DUs. This is not limited in embodiments of this application. The gNB may communicate with a 5G core network (5G core network, 5GC) core network element through a next generation (next generation, NG) interface, and different gNBs may communicate with each other through an Xn interface, for example, through an Xn-control (control, C) interface. The CU may communicate with different DUs through F1 interfaces.

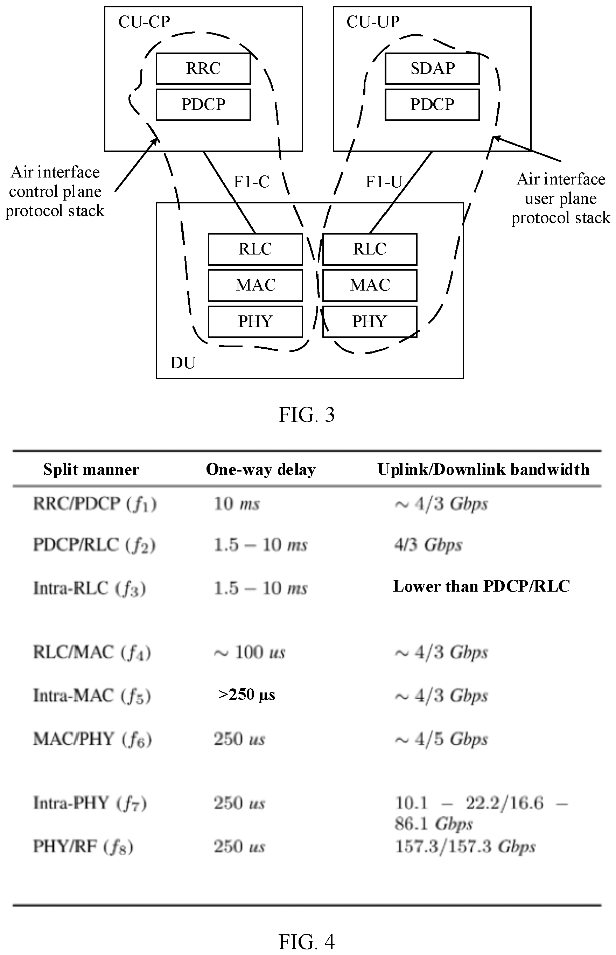

In some examples, function split between the CU and the DU in the 5G access network device is performed in a static split manner, and fixed split is performed at a protocol stack function granularity. As shown in FIG. 3, protocol stacks such as radio link control (radio link control, RLC), media access control (media access control, MAC), and physical layer (physical layer, PHY) may be located in the DU of the access network device. MAC may also be referred to as media access control, medium access control, or the like. This is not limited in embodiments of this application. Protocol stacks such as radio resource control (radio resource control, RRC), service data adaptation protocol (service data adaptation protocol, SDAP), and packet data convergence protocol (packet data convergence protocol, PDCP) may be located in the CU of the access network device. The RRC implements air interface radio resource and air interface connection control, and belongs to a control plane (control plane, CP) protocol. The SDAP performs mapping between a quality of service flow (quality of service flow, QoS-flow) and a data radio bearer (data radio bearer, DRB), and belongs to a user plane (user plane, UP) protocol. The QoS-flow represents a service data flow having a specific quality of service (quality of service, QoS) requirement.

It can be learned from FIG. 3 that, for the DU, both a control plane protocol stack and a user plane protocol stack relate to RLC, MAC, and PHY. For the CU, PDCP is applicable to the control plane protocol stack and the user plane protocol stack, the RRC corresponds to only the control plane protocol stack, and the SDAP corresponds to only the user plane protocol stack. If a function of the control plane protocol stack is performed, the CU communicates with the DU through an F1-C interface. If a function of the user plane protocol stack is performed, the CU communicates with the DU through an F1-user (user) U interface. On the basis of CU-DU separation, the CU of the access network device may be separated into a CP unit and a UP unit. The CP of the CU of the access network device may be denoted as a gNB-CU-CP, and the UP of the CU of the access network device may be denoted as a gNB-CU-UP. A PDCP layer protocol exists in each of the gNB-CU-CP unit and the gNB-CU-UP unit, an RRC layer is located above the PDCP layer in the gNB-CU-CP unit, and an SDAP layer is located above the PDCP layer in the gNB-CU-UP unit.

The RLC layer may provide transparent data transmission and data transmission in an unacknowledged mode and an acknowledged mode. The MAC layer is mainly responsible for controlling and connecting a physical medium at the physical layer. The PHY layer is responsible for transmitting bits or bit groups on a physical medium, including encoding sent information and decoding received information. For a specific protocol, refer to a related technology, for example, 3GPP technical specification (technical specification, TS) 38.300. Details are not described herein in embodiments of this application.

Currently, in a network deployment phase, fixed radio access network (radio access network, RAN) function split may be set based on prior statistical information, such as a network peak rate and an average data rate requirement, to deploy the CU and the DU. It is clear that, the foregoing function split of the access network device that is merely fixed or static cannot adapt to a real-time change of service traffic. Certainly, FIG. 3 shows only one possible function split manner. Other fixed split manners may cause insufficient compute resource utilization and bandwidth resource utilization. As shown in FIG. 4, for example, when a channel bandwidth is 100 megahertz (Megahertz, MHz), a modulation scheme is 256 quadrature amplitude modulation (quadrature amplitude modulation, QAM), and an uplink and a downlink use multiple-input multiple-output (multiple-input multiple-output, MIMO), different function split manners have requirements for transmission bandwidths and transmission delays of the uplink and the downlink. The MIMO condition may be, for example, 8 MIMO layers. It can be learned from FIG. 4 that, when a split manner is closer to lower-layer split, a requirement for link bandwidth capacity is higher, and corresponding optical fiber deployment costs are also higher. When a split manner is closer to higher-layer split, processing functions involved in lower-layer function entities are more scattered, energy consumption is higher, and total deployment costs of compute resources are also higher. Certainly, any fixed split manner may cause insufficient compute resource utilization and bandwidth utilization for a real-time change of a traffic service. In other words, different services have different QoS capability requirements, such as a network delay, a rate, and reliability. A static split manner cannot dynamically adapt to diversified service QoS requirements.

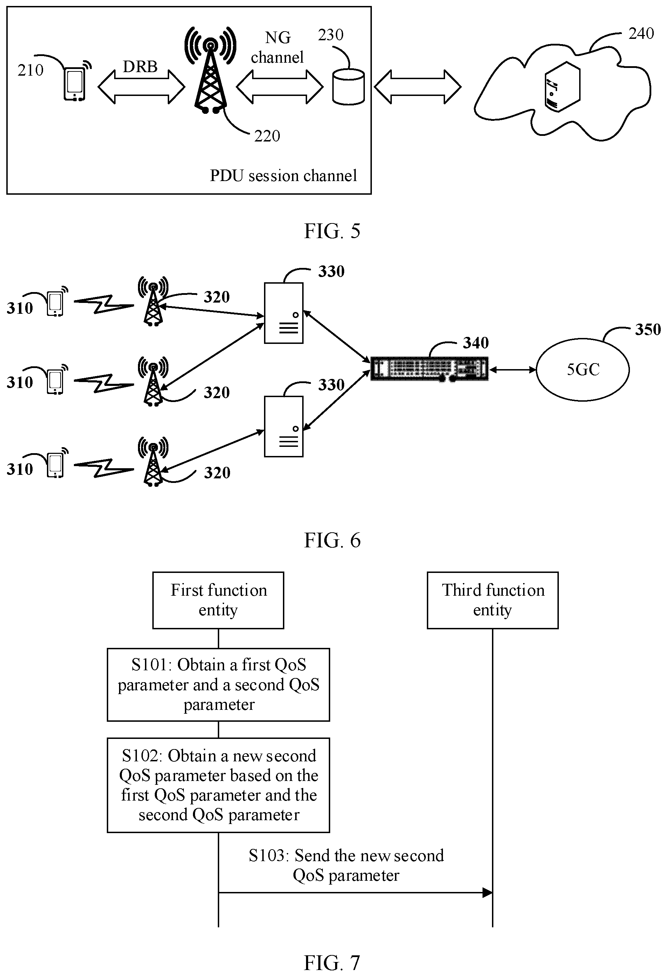

In a 5G communication scenario, in an establishment procedure of establishing a protocol data unit (protocol data unit, PDU) session (session), a communication channel may be provided for data transmission between a terminal and an application server (application server) located in a data network. For example, establishing the PDU session may include: establishing a data radio bearer (data radio bearer, DRB) between the terminal and a RAN, establishing a next generation-user plane channel (next generation-user plane tunnel, NG-U Tunnel) between the RAN and a user plane function (user plane function, UPF) in a core network, and providing corresponding QoS guarantee. Refer to FIG. 5. A PDU session channel is established between a terminal 210, an access network device 220, and a core network element 230, and may include a DRB between the terminal 210 and the access network device 220 and a next generation (next generation, NG) channel between the access network device 220 and the core network element 230. The NG channel may be the NG-U tunnel mentioned above. The core network element 230 may be, for example, a UPF. The core network element 230 may be communicatively connected to a cloud server 240, to schedule a function in the cloud server 240. The access network device 220 may establish the DRB with the terminal 210 based on a QoS requirement of a service delivered by a core network. For example, the access network device obtains, through the NG channel, the QoS requirement delivered by the core network element 230. The access network device 220 may map a QoS flow (flow) of the service to a corresponding DRB for transmission, to meet a QoS requirement corresponding to the QoS flow, for example, a requirement such as a transmission delay or a bit rate.

It may be understood that the terminal 210 is similar to the terminal 110, and the access network device 220 and the core network element 230 may belong to the network device 120.

However, in a process of establishing a PDU session, the access network device establishes a DRB based on a QoS profile delivered by the core network. The DRB is used to ensure that air interface transmission between the terminal and the access network device meets a QoS requirement. However, the QoS does not consider possible QoS impact inside the access network device. For example, if the access network device is divided into a CU, a DU, and/or an RU, for a midhaul link between the CU and the DU and/or a fronthaul link between the DU and the RU, QoS of the entire PDU session cannot be ensured.

Therefore, this application provides a communication method. A QoS parameter of the service is adjusted to obtain a new QoS parameter, so that after a DRB is established based on the new QoS parameter, the QoS requirement of the service can be met, thereby improving user experience.

FIG. 6 is a diagram of a communication scenario according to an embodiment of this application.

As shown in FIG. 6, an access network device may be further divided into a plurality of function entities such as an RU 320, a DU 330, and a CU 340. Certainly, the access network device may include one or more RUs 320, one or more DUs 330, and one or more CUs 340. The CU 340 is connected to a 5GC 350 to implement communication with a core network device. In embodiments of this application, the core network device may also be referred to as a core network element.

The 5GC 350 may be connected to a plurality of CUs 340, one CU 340 may be connected to a plurality of DUs 330, and one DU 330 may be connected to a plurality of RUs 320. A terminal 310 may access a network via any RU 320. There may be one or more terminals 310. It may be understood that the terminal 310 is similar to the terminal 110. Details are not described herein again in embodiments of this application.

In some examples, the access network device may be a gNB. Protocol function entities of the access network device may include the CU 340 and the DU 330. The access network device provides a new radio (new radio, NR) user plane and control plane protocol endpoint for a terminal, and communicates with the 5GC 350 through an NG interface. NR is a 5G radio access technology. The access network device is configured to provide a wireless network connection function between the terminal and a core network.

In some examples, the CU 340 may host RRC, SDAP, and PDCP protocols of the access network device and control operations of one or more DUs. The CU 340 communicates with the DU 330 through an F1 interface.

In some examples, the DU 330 may host RLC, MAC, and PHY layers of the access network device, and its operation is controlled by the CU 340. One DU 330 may support one or more cells, and one cell supports one DU 330.

In some examples, the 5GC 350 may include any possible core network element such as an access and mobility management function (access and mobility management function, AMF) entity, a session association function (session management function, SMF) entity, a user plane function (user plane function, UPF) entity, and a unified data management (unified data management, UDM) entity.

In some examples, the RU 320, the DU 330, and the CU 340 may be deployed on a same physical device, or may be separately deployed on different physical devices. Alternatively, in the RU 320, the DU 330, and the CU 340, some function entities are deployed on a same physical device, and some function entities are deployed on different physical devices. This is not limited in embodiments of this application.

In some embodiments, the access network device may be further split into two function entities. For example, the CU 340 and the DU 330 are deployed on a same physical device, and the CU 340 and the DU 330 may be considered as one function entity. Alternatively, the DU 330 and the RU 320 are deployed on a same physical device, and the DU 330 and the RU 320 may be considered as one function entity.

Certainly, this application is not limited to the 5G network architecture. Embodiments of this application are also applicable to a long term evolution (long term evolution, LTE) network and a future possible network architecture like a 6G network. It should be understood that embodiments of this application are applicable to any network architecture having a communication connection capability.

FIG. 7 is a flowchart of a communication method according to an embodiment of this application.

As shown in FIG. 7, a communication process may be applied to but is not limited to the communication scenarios shown in FIG. 1 and FIG. 6. The method may include the following steps.

S101: A first function entity obtains a first QoS parameter and a second QoS parameter.

In some examples, the first function entity may be considered as a function entity configured to adjust a QoS parameter.

In some embodiments, the first function entity may obtain first information from the second function entity, and determine the first QoS parameter based on the first information. This manner may be referred to as Manner A. Alternatively, the first function entity may determine the first QoS parameter based on a corresponding configuration. This manner may be referred to as Manner B. The first QoS parameter may indicate a QoS requirement corresponding to a communication link between two communicatively connected second function entities of different types.

In some embodiments, the first function entity may obtain the second QoS parameter sent by a core network element, where the second QoS parameter indicates a QoS requirement of a service.

In this embodiment of this application, a specific implementation of obtaining the first QoS parameter and the second QoS parameter is not limited. In some other embodiments, alternatively, the foregoing QoS parameters may be obtained from another network element.

In some embodiments, the second function entity is a function entity in a RAN, a core network, or a network management domain.

For example, the second function entity is a CU. Alternatively, the second function entity is a function entity having CU and AMF functions. Alternatively, the second function entity is a function entity having CU and UPF functions. Alternatively, the second function entity is a function entity having CU and operation, administration, and maintenance (operations administration and maintenance, OAM) functions. OAM may be considered as a function belonging to the network management domain. It may be understood that the foregoing descriptions are merely some examples. This is not limited in embodiments of this application.

In embodiments of this application, when the second function entity includes different communication functions, a QoS parameter of the service can be adjusted, thereby improving universality.

In some embodiments, when the second function entity is the function entity in the RAN, the second function entity may include at least one of a CU, a DU, and an RU.

In some examples, the two communicatively connected second function entities of different types may include a first target entity and a second target entity. For example, the first target entity may be a CU, and the second target entity may be a DU; or the first target entity may be a DU, and the second target entity may be an RU. For another example, the first target entity may be a DU, and the second target entity may be a CU; or the first target entity may be an RU, and the second target entity may be a DU. For another example, the first target entity may be a function entity having CU and DU functions, and the second target entity may be an RU; or the first target entity may be a CU, and the second target entity may be a function entity having DU and RU functions. Certainly, the foregoing descriptions are merely some possible examples. This is not limited in this embodiment of this application.

Embodiments of this application provide a plurality of forms of the second function entity, so that a QoS parameter of the service can be adjusted in any possible form, to meet the QoS requirement of the service, thereby improving user experience.

The following separately describes Manner A and Manner B of obtaining the first QoS parameter.

### Manner A:

In some implementations, the first function entity may receive the first information corresponding to a first interface sent by the second function entity, to obtain the first QoS parameter, where the first information indicates a network communication status corresponding to the first interface, and the first interface is a communication interface between the two communicatively connected second function entities of different types.

In some examples, the first information may include a bandwidth resource of the first interface.

In some examples, the first information may include a transmission delay of the first interface.

In some examples, the first information may include a packet loss rate of the first interface.

In some examples, the first information may include reliability of the first interface.

In some examples, the first information may include an internal processing delay of the first target entity.

For example, the first target entity is a CU, and the second target entity is a DU. For example, the CU obtains an internal processing delay of the CU, includes the internal processing delay of the CU in the first information corresponding to the first interface, and sends the first information to the first function entity. For another example, the CU obtains an internal processing delay of the CU, and sends the internal processing delay of the CU to the DU; and then includes the internal processing delay of the CU in the first information corresponding to the first interface sent by the DU to the first function entity.

In some examples, the first information may include an internal processing delay of the second target entity.

For example, the first target entity is a CU, and the second target entity is a DU. For example, the DU obtains an internal processing delay of the DU, includes the internal processing delay of the DU in the first information corresponding to the first interface, and sends the first information to the first function entity. For another example, the DU obtains an internal processing delay of the DU, and sends the internal processing delay of the DU to the CU; and then includes the internal processing delay of the DU in the first information corresponding to the first interface sent by the CU to the first function entity.

In some examples, the first information may include a bandwidth resource of the first interface and a transmission delay of the first interface. In some examples, the first information may include a bandwidth resource of the first interface, a transmission delay of the first interface, and reliability of the first interface. In some examples, the first information may include a bandwidth resource of the first interface, a transmission delay of the first interface, a packet loss rate of the first interface, and reliability of the first interface. In some examples, the first information may include a bandwidth resource of the first interface, a transmission delay of the first interface, a packet loss rate of the first interface, reliability of the first interface, and an internal processing delay of the first target entity. In some examples, the first information may include a bandwidth resource of the first interface, a transmission delay of the first interface, a packet loss rate of the first interface, reliability of the first interface, an internal processing delay of the first target entity, and an internal processing delay of the second target entity.

It may be understood that only a limited quantity of examples are shown above. The first information may further include any other two, three, four, or five items. This is not limited in embodiments of this application.

In other examples, the first information may further include any other parameter related to the network communication status. In other words, the first information may include but is not limited to one or more of the foregoing information. This is not limited in embodiments of this application.

For example, the first function entity may determine, based on any one or more parameters in the first information, a current QoS parameter of the first interface between the first target entity and the second target entity.

For example, the first function entity may determine, based on the transmission delay of the first interface, a packet delay budget (packet delay budget, PDB) corresponding to the first interface. For another example, the first function entity may determine, based on the transmission delay of the first interface and the internal processing delay of the first target entity, transmission and processing delays corresponding to the first interface, where the transmission and processing delays corresponding to the first interface may be collectively referred to as a delay of the first interface. For another example, the first function entity may determine, based on the packet loss rate of the first interface, a packet error rate (packet error rate, PER) corresponding to the first interface.

In some examples, the first QoS parameter may be directly a parameter in the first information.

Embodiments of this application provide a plurality of possible parameters included in the first information, so that the first function entity determines an appropriate first QoS parameter based on one or more parameters in the first information.

It may be understood that the first function entity can more timely obtain various status information of the first interface in Manner A, so that the first function entity determines a more appropriate first QoS parameter based on the status information.

### Manner B:

In some other implementations, the first function entity determines the first QoS parameter based on a corresponding configuration. For example, the first function entity may determine, based on a first correspondence and a target policy, the first QoS parameter corresponding to the target policy, where the first correspondence indicates an association relationship between the first QoS parameter and a candidate function split manner, the candidate function split manner is a communication function split manner of the two communicatively connected second function entities of different types, the candidate function split manner includes a target function split manner, and the target function split manner has an association relationship with the target policy.

In some examples, alternatively, the first function entity may be a function entity that determines one or more target policies, that is, a function entity configured to flexibly split communication functions between different target entities. For example, the first function entity may be referred to as a radio access network split control function (radio access network split control function, RSCF). Certainly, a name of the first function entity is not limited in embodiments of this application.

For example, the first function entity may determine a target policy, where the target policy indicates a communication function split manner of a first target entity and a second target entity. In some examples, the first function entity may determine, for different QoS flows, a target policy corresponding to any QoS flow. In other words, the first function entity may determine, for each possible QoS flow at a granularity of the QoS flow, a target policy corresponding to the QoS flow.

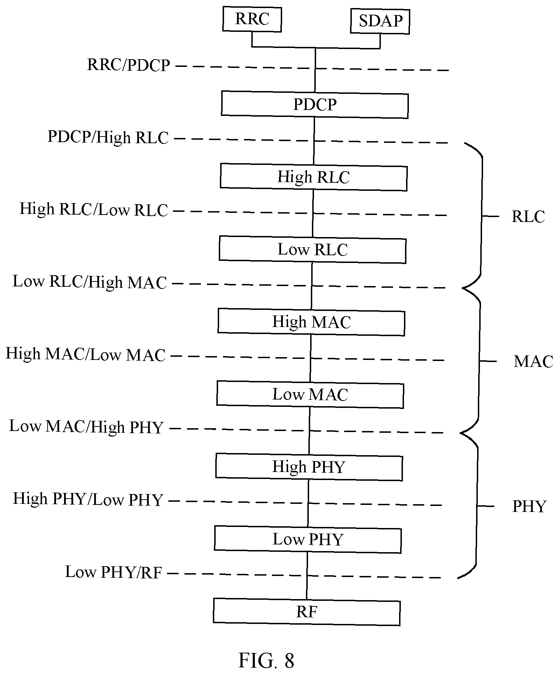

In some examples, FIG. 8 shows a plurality of possible candidate function split manners. Communication functions may be split at a protocol layer granularity. For example, a plurality of possible candidate function split manners such as Option (option) 1 to Option 8 are provided. Option 1 may be communication function split between RRC and PDCP shown in FIG. 8, or Option 1 may be communication function split between SDAP and PDCP shown in FIG. 8. It may be understood that, in the following embodiments of this application, control plane RRC is used as an example for description. For division of a user plane, RRC may be replaced with SDAP. Details are not described in embodiments of this application.

Option 2 may be communication function split between PDCP and high RLC shown in FIG. 8. Option 3 may be communication function split between high RLC and low RLC shown in FIG. 8. Therefore, Option 3 may also be considered as intra RLC communication function split. Option 4 may be communication function split between low RLC and high MAC shown in FIG. 8. Option 5 may be communication function split between high MAC and low MAC shown in FIG. 8. Therefore, Option 5 may also be considered as intra MAC communication function split. Option 6 may be communication function split between low MAC and high PHY shown in FIG. 8. Option 7 may be communication function split between high PHY and low PHY shown in FIG. 8. Therefore, Option 7 may also be considered as intra PHY communication function split. Option 8 may be communication function split between low PHY and radio frequency (radio frequency, RF) shown in FIG. 8.

For example, the first target entity is a CU, and the second target entity is a DU. For Option 2, the CU may be configured to implement functions of PDCP and a layer (for example, RRC) above PDCP, and the DU may be configured to implement functions of RLC and layers below RLC.

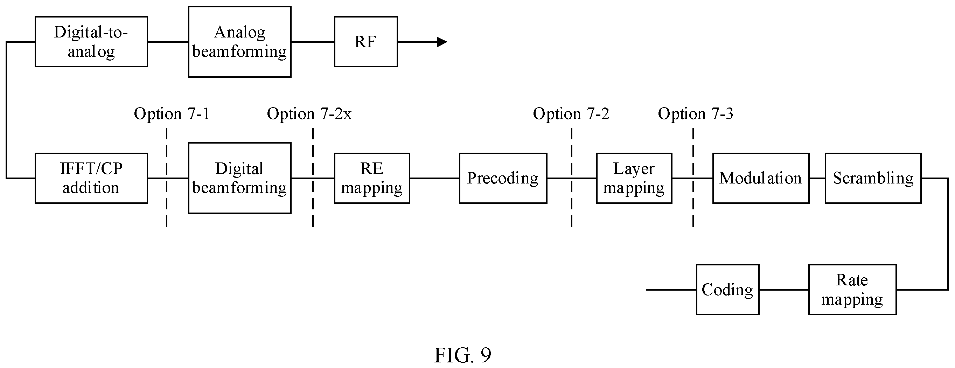

In some other examples, for intra (intra) communication function split of some protocol layers, such as RLC, MAC, and PHY, the protocol layer may be divided into a higher layer and a lower layer. The following uses PHY as an example to describe intra communication function split of a protocol layer. A split manner of another protocol layer is similar to that of PHY. A difference lies in that intra protocol layer communication functions are different. For details, refer to a communication function configured in a corresponding protocol layer. This is not limited in embodiments of this application. Refer to FIG. 9. Intra PHY communication function split is performed in downlink communication. It is assumed that intra PHY may be further split into functions such as coding (coding), rate mapping (rate mapping), scrambling (scrambling), modulation (modulation), layer (layer) mapping (mapper), precoding (precoding), resource element (resource element, RE) mapping, digital beamforming (digital beamforming, DBF), inverse fast Fourier transform (inverse fast Fourier transform, IFFT)/cyclic prefix (cyclic prefix, CP) addition (addition), digital-to-analog (digital-to-analog), and analog beamforming (analog beamforming). The RE may be a unit radio resource including one subcarrier and one symbol (symbol). In this case, the split manner of Option 7 may further include manners such as Option 7-1, Option 7-2, Option 7-2x, and Option 7-3.

For example, Option 7-1 may be communication function split between IFFT/CP addition and DBF shown in FIG. 9; Option 7-2 may be communication function split between precoding and layer mapping shown in FIG. 9; Option 7-2x may be communication function split between DBF and RE mapping shown in FIG. 9; and Option 7-3 may be communication function split between layer mapping and modulation shown in FIG. 9.

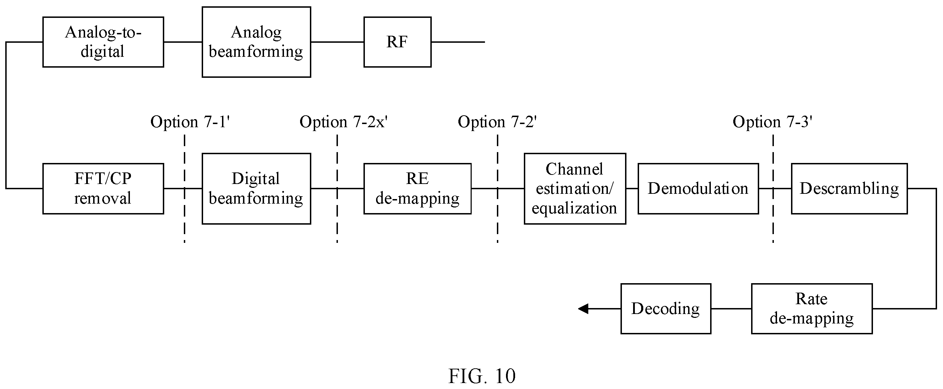

Refer to FIG. 10. Intra PHY communication function split is performed in uplink communication. It is assumed that intra PHY may be further split into functions such as decoding (decoding), rate de-mapping (rate de-mapping), descrambling (descrambling), demodulation (demodulation), channel estimation (channel estimation)/equalization (equalization), RE de-mapping (de-mapping), DBF, fast Fourier transform (fast Fourier transform, FFT)/CP removal (removal), analog-to-digital (analog-to-digital), and analog beamforming. In this case, the split manner of Option 7 may further include manners such as Option 7-1', Option 7-2', Option 7-2x', and Option 7-3'. Demodulation may also be referred to as de-modulation.

For example, Option 7-1' may be function split between FFT/CP removal and DBF shown in FIG. 10; Option 7-2' may be communication function split between RE de-mapping and channel estimation/equalization shown in FIG. 10; Option 7-2x' may be communication function split between DBF and RE de-mapping shown in FIG. 10; and Option 7-3' may be communication function split between demodulation and descrambling shown in FIG. 10.

Certainly, for intra MAC and intra RLC split manners, refer to the intra PHY split manner. A specific communication function of each intra protocol layer and specific functions to be combined together through split may be determined based on an actual situation. This is not limited in embodiments of this application.

It may be understood that any one of the plurality of options shown in FIG. 8 to FIG. 10 may be considered as a candidate function split manner. One or more of the foregoing options form one or more candidate function split manners. The first function entity may select one option from the one or more candidate function split manners as a target function split manner, where the target function split manner may be used to obtain a target policy. It may be considered that the target policy includes a target function split manner indicating how to perform function split, and communication functions respectively corresponding to the first target entity and the second target entity corresponding to the target policy.

It should be noted that FIG. 8 to FIG. 10 show only a limited quantity of candidate function split manners. In other examples, any other more or fewer possible split manners may be included. This is not limited in embodiments of this application.

It may be understood that, if the first function entity determines a first target policy and/or a second target policy at different granularities, assuming that the granularity is a QoS flow, the first target entity is a CU, and the second target entity is a DU. For a QoS flow 1, it may be determined that the target policy corresponds to Option 2; and for a QoS flow 2, it may be determined that the target policy corresponds to Option 5. Certainly, the foregoing description is merely an example. This is not limited in embodiments of this application.

In some examples, a communication function related to the candidate function split manner may further include a core network function, a network management domain function, and the like, for example, may further include a mobility management function, a user plane function, an identity management function, and the like of a core network. This is not limited in embodiments of this application. For example, functions such as an AMF and a UPF in a core network are classified into the communication function corresponding to the first target entity. For another example, an OAM function in a network management domain is classified into the communication function corresponding to the first target entity.

It may be understood that the first function entity may determine a target policy corresponding to the first target entity and the second target entity, to configure communication functions respectively corresponding to the first target entity and the second target entity.

In embodiments of this application, a plurality of candidate function split manners are provided in advance, and a split manner corresponding to the target policy is selected from the plurality of candidate function split manners. This reduces calculation complexity of dynamically configuring the target policy, and can also avoid improper split of the communication function.

Based on the plurality of candidate function split manners provided in FIG. 8 to FIG. 10, embodiments of this application also provide a plurality of target policies, indicating a plurality of split cases of communication functions of different function entities. It is assumed that the first target entity is a CU, and the second target entity is a DU. Alternatively, it is assumed that the first target entity is a DU, and the second target entity is an RU.

### Case 1:

For example, a communication function of the CU includes RRC, and a communication function of the DU includes PDCP, RLC, MAC, higher physical layer (high physical layer, HIGH PHY), and low physical layer (low physical layer, LOW PHY). For another example, a communication function of the DU includes PDCP, RLC, MAC, and HIGH PHY, and a communication function of the RU includes LOW PHY.

### Case 2:

For example, a communication function of the CU includes RRC and PDCP, and a communication function of the DU includes RLC, MAC, HIGH PHY, and LOW PHY. For another example, a communication function of the DU includes RLC, MAC, and HIGH PHY, and a communication function of the RU includes LOW PHY.

### Case 3:

For example, a communication function of the CU includes RRC, PDCP, and RLC, and a communication function of the DU includes MAC, HIGH PHY, and LOW PHY. For another example, a communication function of the DU includes MAC and HIGH PHY, and a communication function of the RU includes LOW PHY.

### Case 4:

In some embodiments, a communication function of the CU includes RRC, PDCP, RLC, and MAC, and a communication function of the DU includes HIGH PHY and LOW PHY. For another example, a communication function of the DU includes HIGH PHY, and a communication function of the RU includes LOW PHY.

### Case 5:

In some embodiments, a communication function of the first target entity includes RRC, PDCP, RLC, MAC, and HIGH PHY. A communication function of the second target entity includes LOW PHY.

For any one of Case 1 to Case 5, for HIGH PHY and LOW PHY, refer to the intra PHY split manners shown in FIG. 9 and FIG. 10. A part that is closer to a MAC layer after the intra PHY function split may be considered as HIGH PHY, and a part that is closer to an RF layer after the intra PHY function split may be considered as LOW PHY.

Embodiments of this application provide a plurality of split manners of communication functions corresponding to function entities, which may be applied to QoS requirements of different services.

In some examples, any one of the foregoing candidate function split manners may correspond to one or more first QoS parameters. For example, the candidate function split manner may correspond to one first QoS parameter, and the first QoS parameter indicates a QoS parameter corresponding to a first interface between the first target entity and the second target entity. Different candidate function split manners may correspond to respective first QoS parameters. A correspondence between the candidate function split manner and the corresponding first QoS parameter may be referred to as a first correspondence. In addition, the candidate function split manner may include a target split manner, and the target split manner may be used to obtain a target policy. Therefore, the first QoS parameter corresponding to the target policy may be obtained based on the target policy and the first correspondence.

If the first function entity uses Manner B, the first QoS parameter may be determined more quickly based on the first correspondence and the target policy, thereby reducing a processing delay and improving execution efficiency.

Embodiments of this application provide a plurality of manners of determining the first QoS parameter, so that the first function entity can determine the first QoS parameter in a proper manner based on different requirements, thereby improving universality.

In some embodiments, the first function entity may receive fourth information sent by a core network element. In other embodiments, the first function entity may receive fourth information forwarded by the second function entity. The fourth information may be sent by a core network element to the second function entity, and forwarded by the second function entity to the first function entity. The fourth information may indicate a second QoS parameter corresponding to at least one service.

In some embodiments, the fourth information may include a PDB.

In some embodiments, the fourth information may include a guaranteed bit rate (guaranteed bit rate, GBR).

In some embodiments, the fourth information may include a PER.

In some embodiments, the fourth information may include a PDB and a GBR. In some embodiments, the fourth information may include a PDB and a PER. In some embodiments, the fourth information may include a GBR and a PER. In some embodiments, the fourth information may include a PDB, a GBR, and a PER.

In other examples, the fourth information may further include any other QoS-related parameter, for example, a possible new QoS parameter in the future. This is not limited in embodiments of this application.

Embodiments of this application provide a plurality of possible parameters included in the fourth information, so that the first function entity determines an appropriate target policy based on the parameters in the fourth information, to meet a plurality of possible QoS requirements.

Certainly, the first QoS parameter may also include any one or more of the foregoing parameters. Details are not described herein again in this application.

S102: The first function entity obtains a new second QoS parameter based on the first QoS parameter and the second QoS parameter.

In some embodiments, the first function entity may adjust the second QoS parameter based on the first QoS parameter obtained in S101, to obtain the new second QoS parameter.

For example, the QoS parameter is a PDB. Assuming that the second QoS parameter is a first PDB, and a first QoS parameter of a first interface between the CU and the DU is a second PDB, the first function entity may obtain a third PDB by subtracting the second PDB from the first PDB. The third PDB may be considered as the new second QoS parameter.

For another example, the QoS parameter is a PDB. Assuming that the second QoS parameter is a first PDB, a first QoS parameter of a first interface between the CU and the DU is a second PDB, and a first QoS parameter of a first interface between the DU and the RU is a fourth PDB, the first function entity obtains a fifth PDB by subtracting the second PDB from the first PDB and then subtracting the fourth PDB. The fifth PDB may be considered as the new second QoS parameter.

For another example, the QoS parameter is a transmission delay. Assuming that the second QoS parameter is a first delay, and a first QoS parameter of a first interface between the DU and the RU includes a second delay and a third delay, where the second delay may be a transmission delay of the first interface, and the third delay may be a processing delay of the first interface, for example, an internal processing delay of the RU, the first function entity obtains a fourth delay by subtracting the second delay from the first delay and then subtracting the third delay. The fourth delay may be considered as the new second QoS parameter.

In some examples, if the QoS parameter is a GBR, the first function entity may use a smaller QoS parameter in the first QoS parameter and the second QoS parameter as the new second QoS parameter.

In some other examples, if the QoS parameter is a PER, the first function entity may obtain the new second QoS parameter based on the first QoS parameter, the second QoS parameter, and a corresponding algorithm. Certainly, the algorithm may be any algorithm used to calculate the PER based on an actual situation. For details, refer to a related technology. This is not limited in embodiments of this application.

S103: The first function entity sends the new second QoS parameter to a third function entity.

In some embodiments, the first function entity may send the second QoS parameter obtained in S102 to the third function entity.

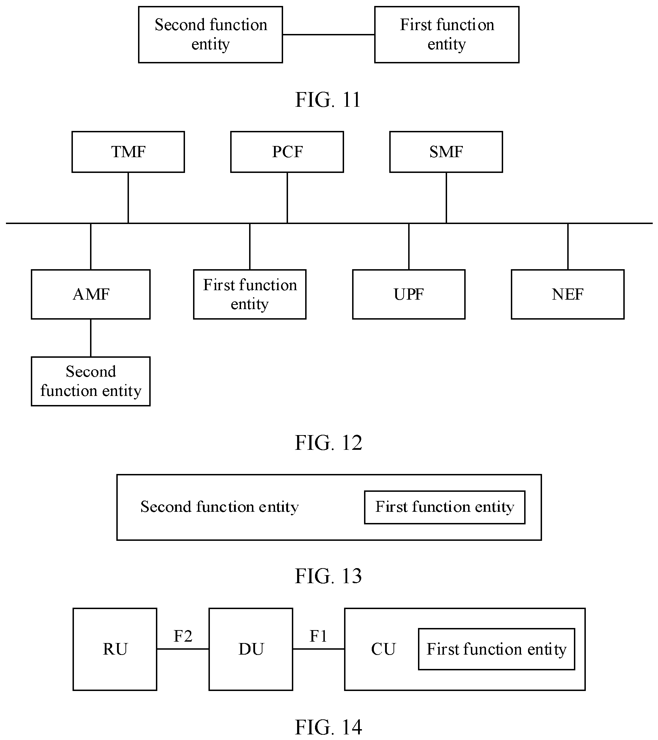

In some examples, the first function entity and the second function entity may be function entities that are independent of each other. Refer to FIG. 11. The first function entity and the second function entity may be different function entities that are independent of each other. The first function entity may be communicatively connected to the second function entity. The first function entity may be deployed on a RAN side, a core network side, or a network management domain side.

For example, if the first function entity is located on the RAN side, a communication connection between the first function entity and any second function entity may be based on a newly defined interface. In this example, the newly defined interface is configured to implement communication between the first function entity and the second function entity. For example, if the second function entity is a function entity in a RAN, the newly defined interface is configured to implement intra RAN communication.

For another example, if the first function entity is located on the core network side, a communication connection between the first function entity and any second function entity may be based on a newly defined interface. Alternatively, a communication connection between the first function entity and any second function entity may partially reuse an interface between a core network and a RAN. Refer to FIG. 12. It is assumed that the core network element further includes an AMF, a task management function (task management function, TMF), a policy control function (policy control function, PCF), an SMF, a UPF, a network exposure function (network exposure function, NEF), and the like. Assuming that the second function entity communicates with an AMF on a RAN side through an N2 interface, the first function entity may reuse the N2 interface. For example, the first function entity implements communication with the second function entity through a newly defined service-based interface between the first function entity and the AMF and the N2 interface. The newly defined service-based interface in this example may be configured to implement communication between the first function entity and the AMF. Certainly, if the second function entity is communicatively connected to another core network element, the newly defined service-based interface may further implement communication between the first function entity and the core network element communicatively connected to the second function entity.

For another example, if the first function entity is located in the network management domain, a communication connection between the first function entity and any second function entity may be based on a newly defined interface. In this example, the newly defined interface is configured to implement communication between a function entity in a network management domain and the second function entity. For example, if the second function entity is a function entity in a RAN, the newly defined interface is configured to implement communication between the function entity in the network management domain and the RAN.

Embodiments of this application are applicable to a scenario in which the first function entity and the second function entity are independent of each other, so that in this scenario, a QoS parameter of the service can be adjusted, and a DRB can be established based on a new QoS parameter to meet the QoS requirement of the service, thereby improving user experience.

In some other examples, refer to FIG. 13. A first function entity may be integrated into a second function entity. In other words, the first function entity may be integrated into one or more second function entities.

For example, the second function entity is a function entity in a RAN, for example, the second function entity is a CU, a DU, and/or an RU. In this case, the first function entity may be integrated into the CU, the DU, and/or the RU. For another example, the first function entity may also be integrated into a near-real-time radio access network intelligent controller (near-real-time radio access network intelligent controller, NRT-RIC) or a non-real-time radio access network intelligent controller (non-real-time radio access network intelligent controller, Non-RT RIC) in an O-RAN architecture.

For another example, the second function entity is a function entity in a core network, for example, the second function entity is an AMF. In this case, the first function entity may be integrated into the AMF.

For another example, the second function entity is a function entity in a network management domain, for example, the second function entity is OAM. In this case, the first function entity may be integrated into the OAM.

In some examples, the first function entity may be simultaneously deployed on a plurality of second function entities. For example, the first function entity may be deployed in a CU and a DU, or the first function entity may be deployed in a DU and an RU.

Embodiments of this application are applicable to a scenario in which the first function entity is integrated into the second function entity, so that in this scenario, a QoS parameter of the service can be adjusted, and a DRB can be established based on a new QoS parameter to meet the QoS requirement of the service, thereby improving user experience.

Certainly, 5G NR is used as an example for description in FIG. 11 to FIG. 13. Embodiments of this application may be further applied to a future 6G network architecture. For example, the first function entity is deployed in any network element function like a RAN, a core network, or a network management domain defined in a 6G network. For example, a possible 6G network architecture includes a radio network area (radio network area, RNA) and an RU. The RNA may include a CU, a DU, and/or a core network function. The first function entity may be deployed on the RNA and/or the RU, to implement split of a communication function between the RNA and the RU.

In some embodiments, refer to the scenarios in FIG. 11 to FIG. 13. The first function entity and the CU are independent of each other. For example, the first function entity and the second function entity are independent of each other, and the CU is a possible second function entity. For another example, the first function entity is integrated into the DU and/or the RU, and the second function entity may include the CU, the DU, and the RU. The first function entity may further send the new second QoS parameter to the third function entity. The third function entity may be considered as a function entity that receives the new second QoS parameter sent by the first function entity.

The third function entity may be a CU, or the third function entity may be a network element having a core network function. The network element having a core network function may be the core network element or the core network device mentioned in the foregoing embodiments. It may be understood that, when the third function entity is a CU, the CU may be considered as the second function entity, or may be considered as the third function entity.

In some examples, it is considered that the DRB is actually established with the terminal via the CU in the access network device. Therefore, if the first function entity and the CU are independent of each other, and the first function entity is communicatively connected to the CU, the first function entity may directly send the new second QoS parameter to the CU. In other examples, if the first function entity is communicatively connected to the core network element, the first function entity is not directly communicatively connected to the CU, and the CU is communicatively connected to the core network element, the first function entity may send the new second QoS parameter to the core network element, and forward the new second QoS parameter to the CU via the core network element.

The CU may initiate a DRB establishment process based on the new second QoS parameter.

Embodiments of this application are applicable to a scenario in which the first function entity and the CU are independent of each other, so that in this scenario, the CU can establish a DRB based on a new QoS parameter to meet the QoS requirement of the service, thereby improving user experience.

In some embodiments, refer to the scenarios in FIG. 11 to FIG. 13. In a scenario in which the first function entity is integrated into the CU, the first function entity may notify the CU of the new second QoS parameter through intra CU data exchange, so that the CU can initiate a data radio bearer establishment process based on the new second QoS parameter.

In some examples, the CU may send, to the terminal, a message carrying a DRB establishment request. The message may include configuration information used for air interface transmission. The configuration information used for air interface transmission may have an association relationship with the new second QoS parameter. For example, a time-frequency resource configured based on the configuration information is used to ensure that a QoS requirement corresponding to the new second QoS parameter is met.

In some examples, the configuration information used for air interface transmission may be used to perform configuration of any one or more of RRC to PHY shown in FIG. 8 to FIG. 10.

It may be understood that, in a scenario in which the first function entity is integrated into the CU, S103 may not be performed.

Embodiments of this application are applicable to a scenario in which the first function entity is integrated into the CU, so that in this scenario, the CU can establish a DRB based on a new QoS parameter to meet the QoS requirement of the service, thereby improving user experience.

Refer to the solution shown in FIG. 7. If the CU establishes a DRB based on the second QoS parameter, although an air interface between the terminal and the access network device meets a QoS requirement, considering that there may also be QoS impact inside the access network device, QoS of an overall communication link of the service cannot meet a QoS requirement corresponding to the second QoS parameter. Therefore, in embodiments of this application, the second QoS parameter may be adjusted based on the first QoS parameter to obtain a new second QoS parameter. The CU may establish a DRB based on the new second QoS parameter, so that the QoS of the overall communication link of the service can meet the QoS requirement corresponding to the second QoS parameter, thereby improving user experience.

In the communication method provided in embodiments of this application, the first function entity may send second information, where the second information indicates the first QoS parameter.

In some embodiments, when the first function entity determines the first QoS parameter based on the first correspondence and the target policy, the first function entity may further send second information to the second function entity, where the second information may indicate the first QoS parameter determined by the first function entity. In this way, the second function entity can configure a transmission resource based on the first QoS parameter indicated by the received second information. The transmission resource configured based on the first QoS parameter meets a QoS requirement corresponding to the first QoS parameter, for example, a delay requirement or a packet error rate requirement.

In some examples, the second information is the first QoS parameter. That is, the first function entity directly sends the first QoS parameter to the second function entity.

In some examples, the second information is information indicating the target function split manner. In other words, the target policy may be indicated by the second information, that is, the first function entity notifies the second function entity of the target policy. The second function entity determines, based on the target policy, the first QoS parameter corresponding to the target policy, and configures a transmission resource based on the first QoS parameter.

Embodiments of this application provide a plurality of manners of indicating the first QoS parameter to the second function entity, so that the first function entity can flexibly select, based on an actual situation, a proper manner to indicate the first QoS parameter to the second function entity.

In some embodiments, when the second information is information indicating the target policy, the first function entity may send at least one candidate function split manner and the first QoS parameter corresponding to the candidate function split manner to the second function entity in advance.

For example, before sending the second information, the first function entity may send, to the second function entity, the at least one candidate function split manner and the first QoS parameter corresponding to the candidate function split manner. For the candidate function split manner, refer to the descriptions in the foregoing embodiments. Details are not described herein again in embodiments of this application. After receiving the at least one candidate function split manner and the first QoS parameter corresponding to the candidate function split manner, if the second function entity receives the second information, indicating the target policy, sent by the first function entity, the second function entity may determine, based on the target policy, the first QoS parameter corresponding to the target policy, so that the second function entity configures a transmission resource based on the first QoS parameter.

The candidate function split manner and the first QoS parameter corresponding to the candidate function split manner are the first correspondence mentioned above.

In embodiments of this application, the first correspondence is preconfigured for the second function entity, so that the first function entity indirectly indicates the first QoS parameter to the second function entity by using the target policy, thereby reducing resource consumption for sending the second information.

It may be understood that, in embodiments of this application, the first function entity indicates the first QoS parameter to the second function entity, so that the second function entity can configure, based on the first QoS parameter, a communication resource that meets a corresponding QoS requirement.

In the communication method provided in embodiments of this application, the first function entity may determine the target policy in the foregoing embodiments based on one or more of the first information corresponding to the first interface, the fourth information, and the third information corresponding to the second function entity. The third information indicates a processing resource status corresponding to the second function entity.

In some embodiments, the first function entity may determine the target policy based on one or more of the first information corresponding to the first interface, fourth information, and third information corresponding to the second function entity.

For example, the first function entity may determine the target policy based on the first information corresponding to the first interface. For another example, the first function entity may determine the target policy based on the first information corresponding to the first interface and the third information corresponding to the second function entity. For another example, the first function entity may determine the target policy based on the first information corresponding to the first interface, the fourth information, and the third information corresponding to the second function entity.

Certainly, only a limited quantity of examples are shown above. The first function entity may further determine the target policy based on any other one or two parameters. This is not limited in embodiments of this application.

In some examples, for example, if the first target entity is a CU and the second target entity is a DU, the first interface may be an interface corresponding to a midhaul link. In some other examples, for example, if the first target entity is a DU and the second target entity is an RU, the first interface may be an interface corresponding to a fronthaul link.

In some examples, the first function entity may further obtain third information from the second function entity.

In some examples, the third information may include processor utilization.

In some examples, the third information may include memory utilization.

In some examples, the third information may include disk utilization.

In some examples, the third information may include processor utilization and memory utilization. In some examples, the third information may include processor utilization and disk utilization. In some examples, the third information may include memory utilization and disk utilization. In some examples, the third information may include processor utilization, memory utilization, and disk utilization.

In other examples, the third information may further include any other parameter related to the processing resource status. This is not limited in embodiments of this application.

Embodiments of this application provide a plurality of possible parameters included in the third information, so that the first function entity determines an appropriate target policy based on the parameters in the third information.

It may be understood that, in embodiments of this application, the target policy is comprehensively determined based on dimensions such as a network communication status of a communication interface, a processing resource status of a function entity, and a QoS requirement of a service. A QoS parameter of the service may be adjusted when communication functions of different function entities are assigned by using the target policy, to meet the QoS requirement of the service, thereby improving user experience.

The following describes the foregoing solutions based on more specific examples.

### Example A:

In some embodiments, refer to the diagram of the network architecture shown in FIG. 14. The first function entity may be deployed in a CU, and the second function entity may include a CU, a DU, and an RU. The CU may communicate with the DU through an F1 interface, and the DU may communicate with the RU through an F2 interface.

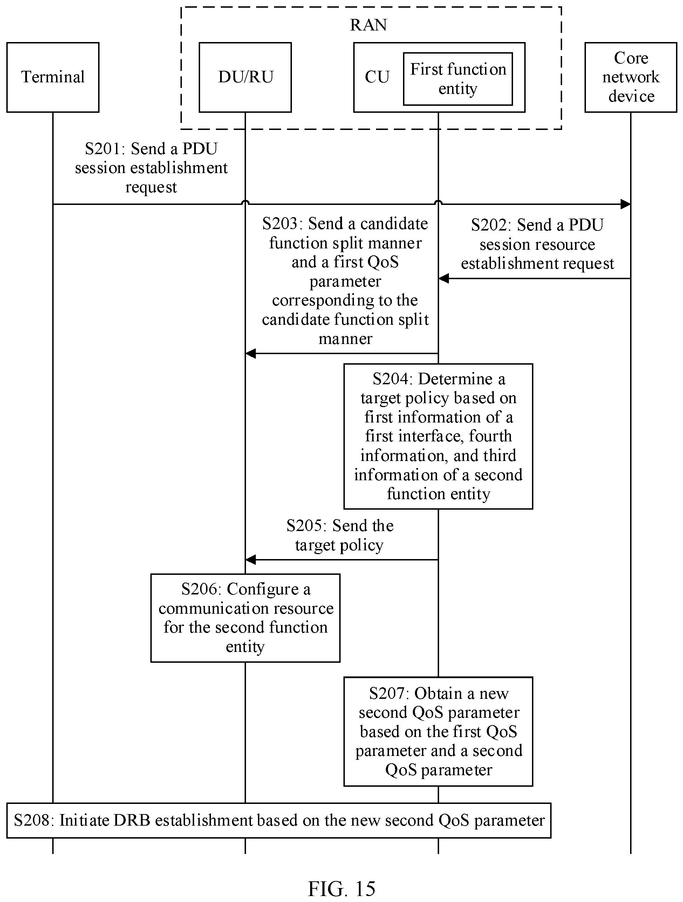

As shown in FIG. 15, an embodiment of this application further provides a communication method. The method is applied to the network architecture shown in FIG. 14. The method may include the following steps.

S201: A terminal sends a PDU session establishment request to a core network device.

In some embodiments, the terminal may send the PDU session establishment request to the core network device.

In other examples, the PDU session establishment request may also be generated by the core network device. In this case, S201 may not be performed.

In some examples, the PDU session establishment request may also be equivalent to another service request, for example, a request for a compute task, a request for an artificial intelligence (artificial intelligence, AI) task, or a request for a data service. In addition, a name of the request is not limited in this embodiment of this application.

S202: The core network device sends a PDU session resource establishment request to a CU.

In some embodiments, the core network device may obtain, based on the PDU session establishment request, a second QoS parameter associated with a PDU session, and the core network device may send the PDU session resource establishment request to the CU, where the request may carry the second QoS parameter, and the second QoS parameter may be at a granularity of a QoS flow.

S203: A first function entity sends a candidate function split manner and a first QoS parameter corresponding to the candidate function split manner to a second function entity.

In some embodiments, the first function entity may send at least one candidate function split manner and a first QoS parameter corresponding to each of the at least one candidate function split manner to the second function entity.

S204: The first function entity determines a target policy based on first information of a first interface, fourth information, and third information of the second function entity.

S205: The first function entity sends the target policy to the second function entity.

For example, the CU may send, to a DU, a target policy corresponding to the CU and the DU, and/or a target policy corresponding to the DU and an RU. For another example, the CU may send, to an RU, a target policy corresponding to a DU and the RU.

S206: The second function entity configures a communication resource for the second function entity.

In some embodiments, the second function entity may determine, based on the target policy sent by the second function entity and the first QoS parameter corresponding to each candidate function split manner, a first QoS parameter corresponding to the target policy. The second function entity configures the communication resource for the second function entity based on the first QoS parameter.

For example, the DU may determine, based on the target policy corresponding to the CU and the DU, a first QoS parameter corresponding to a midhaul link, and the DU configures, based on the first QoS parameter corresponding to the midhaul link, a communication resource corresponding to the midhaul link. Similarly, the RU may determine a first QoS parameter corresponding to a fronthaul link, and the DU configures, based on the first QoS parameter corresponding to the fronthaul link, a communication resource corresponding to the fronthaul link.

It may be understood that the purpose of S203 to S206 is to preconfigure the communication resource corresponding to the fronthaul link and the communication resource corresponding to the midhaul link. In some possible examples, the first function entity may also directly send the first QoS parameter to the second function entity. In this case, S203 to S205 may not be performed.

In addition, S203 to S206 are optional. Alternatively, S203 to S206 may be performed before S201. This is not limited in this embodiment of this application.

S207: The first function entity obtains a new second QoS parameter based on the first QoS parameter and the second QoS parameter.

In some examples, the first function entity may correct, based on the first QoS parameter corresponding to the fronthaul link and/or the first QoS parameter corresponding to the midhaul link, the second QoS parameter delivered by the core network device, to obtain the new second QoS parameter. For example, the QoS parameter is a PDB. The first function entity subtracts a PDB that is the first QoS parameter corresponding to the fronthaul link and/or a PDB that is the first QoS parameter corresponding to the midhaul link from a PDB that is the second QoS parameter, to obtain a PDB that is the new second QoS parameter.

In some examples, if S203 to S206 are not performed, the first function entity may determine the first QoS parameter based on the first information of the first interface sent by the second function entity, and obtains the new second QoS parameter based on the first QoS parameter and the second QoS parameter.

S208: The CU initiates DRB establishment based on the new second QoS parameter.

It may be understood that, after the CU establishes a DRB with the terminal, the CU may perform mapping from a QoS flow to the DRB.

It may be understood that, for specific implementation processes of S201 to S208, refer to the descriptions of the embodiments in FIG. 7 to FIG. 13. Details are not described herein again in embodiments of this application.

In the embodiment described in Example A, the first function entity integrated into the CU can select an appropriate function split manner, thereby ensuring corresponding QoS requirements of the fronthaul link and the midhaul link. In addition, session QoS is corrected based on QoS information of the fronthaul link/midhaul link, so that a QoS requirement for data transmission between the access network device and the terminal can be more accurately ensured, thereby improving user experience.

### Example B:

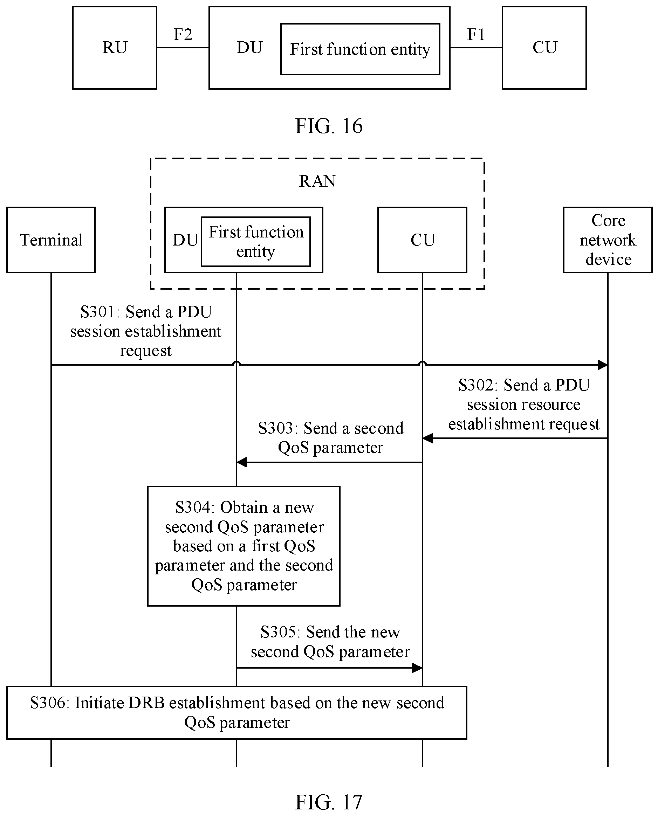

In some embodiments, refer to the diagram of the network architecture shown in FIG. 16. The first function entity may be deployed in a DU, and the second function entity may include a CU, a DU, and an RU. The CU may communicate with the DU through an F1 interface, and the DU may communicate with the RU through an F2 interface.

As shown in FIG. 17, an embodiment of this application further provides a communication method. The method is applied to the network architecture shown in FIG. 16. The method may include the following steps.

S301: A terminal sends a PDU session establishment request to a core network device.

S302: The core network device sends a PDU session resource establishment request to a CU.

S301 and S302 are similar to S201 and S202. For details, refer to the descriptions of the corresponding embodiment in FIG. 15. Details are not described herein again in embodiments of this application.

S303: The CU sends a second QoS parameter to a first function entity.

In some examples, because the PDU session resource establishment request sent by the core network to the CU carries the second QoS parameter, the CU may send the second QoS parameter to the first function entity through an F1 interface.

In some examples, the second QoS parameter may be at a granularity of a PDU session or may be at a granularity of a QoS flow.

S304: The first function entity obtains a new second QoS parameter based on the first QoS parameter and the second QoS parameter.

S304 is similar to S207. For details, refer to the descriptions of the corresponding embodiment in FIG. 15. Details are not described herein again in embodiments of this application.

In some embodiments, the first function entity may further send a candidate function split manner and a first QoS parameter corresponding to the candidate function split manner to each second function entity. The first function entity may further determine a target policy, and send the target policy to the second function entity. The first function entity may further send the first QoS parameter to the second function entity. In this way, the second function entity can configure a communication resource of the second function entity based on the first QoS parameter. Certainly, for the foregoing specific implementation process, refer to related descriptions of S203 to S206. Details are not described herein again in embodiments of this application.

S305: The first function entity sends the new second QoS parameter to the CU.

It may be understood that, because the first function entity and the CU are independent of each other, the first function entity sends the new second QoS parameter to the CU, so that the CU performs a subsequent operation.

S306: The CU initiates DRB establishment based on the new second QoS parameter.

S306 is similar to S208. For details, refer to the descriptions of the corresponding embodiment in FIG. 15. Details are not described herein again in embodiments of this application.

It may be understood that for specific implementation processes of S301 to S306, refer to the descriptions of the embodiments in FIG. 7 to FIG. 13. Details are not described herein again in embodiments of this application.

In the embodiment described in Example B, the first function entity integrated into the DU can obtain more real-time network status information, select an appropriate function split manner in more real time, thereby ensuring corresponding QoS requirements of the fronthaul link and the midhaul link. In addition, session QoS is corrected based on QoS information of the fronthaul link/midhaul link, so that a QoS requirement for data transmission between the access network device and the terminal can be more accurately ensured, thereby improving user experience.

### Example C:

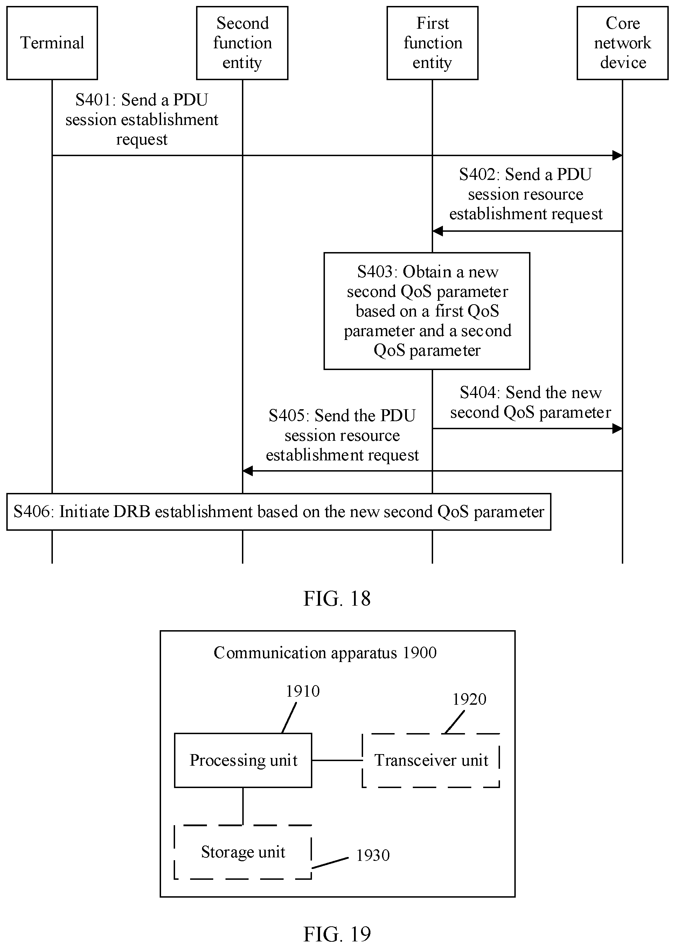

As shown in FIG. 18, an embodiment of this application further provides a communication method. The method is applied to the network architectures shown in FIG. 11 and FIG. 12. The second function entity may include a CU, a DU, and an RU. The CU may communicate with the DU through an F1 interface, and the DU may communicate with the RU through an F2 interface. The method may include the following steps.

S401: A terminal sends a PDU session establishment request to a core network device.

In some examples, the core network device may be, for example, an SMF.

S402: The core network device sends a PDU session resource establishment request to a CU.

S301 and S302 are similar to S201 and S202. For details, refer to the descriptions of the corresponding embodiment in FIG. 15. Details are not described herein again in embodiments of this application.

S403: The first function entity obtains a new second QoS parameter based on the first QoS parameter and the second QoS parameter.

S403 is similar to S207. For details, refer to the descriptions of the corresponding embodiment in FIG. 15. Details are not described herein again in embodiments of this application.

In some embodiments, the first function entity may further send a candidate function split manner and a first QoS parameter corresponding to the candidate function split manner to each second function entity. The first function entity may further determine a target policy, and send the target policy to the second function entity. The first function entity may further send the first QoS parameter to the second function entity. In this way, the second function entity can configure a communication resource of the second function entity based on the first QoS parameter. Certainly, for the foregoing specific implementation process, refer to related descriptions of S203 to S206. Details are not described herein again in embodiments of this application.

S404: The first function entity sends the new second QoS parameter to the core network device.

It may be understood that, because the first function entity and the CU are independent of each other, the first function entity sends the new second QoS parameter to the core network device, so that the new second QoS parameter is forwarded to the CU via the core network device.

S405: The core network device sends the PDU session resource establishment request to the second function entity.

In some examples, the PDU session resource establishment request may carry the new second QoS parameter received by the core network device in S404.

Certainly, in some examples, when the first function entity is communicatively connected to the CU, the first function entity directly sends the new second QoS parameter to the CU in S404. The PDU session resource establishment request in S405 may no longer carry the new second QoS parameter.

S406: The CU initiates DRB establishment based on the new second QoS parameter.

S406 is similar to S208. For details, refer to the descriptions of the corresponding embodiment in FIG. 15. Details are not described herein again in embodiments of this application.

It may be understood that for specific implementation processes of S401 to S406, refer to the descriptions of the embodiments in FIG. 7 to FIG. 13. Details are not described herein again in embodiments of this application.

In the embodiment described in Example C, the first function entity deployed in a core network selects an appropriate function split manner, thereby ensuring corresponding QoS requirements of the fronthaul link and the midhaul link. In addition, the first function entity corrects session QoS based on QoS information of the fronthaul link/midhaul link, so that a QoS requirement for data transmission between the access network device and the terminal can be more accurately ensured, thereby improving user experience. It may be understood that the core network device may obtain more global network status information, and make a more global decision.

Certainly, Example A to Example C are merely some possible specific implementations. Certainly, alternatively, the first function entity may be deployed on an RU. A process thereof is similar to that in Example B. For details, refer to related descriptions in Example B. Details are not described herein again in embodiments of this application.

In the communication method provided in embodiments of this application, it is considered that a future network node may not only have a transmission function, but also have an application service processing function, for example, training and inference of artificial intelligence (artificial intelligence, AI). Therefore, embodiments of this application are also applicable to splitting a computing function of an application server together with a RAN function and a core network function, and indicating the functions to different function entities. This is not limited in embodiments of this application.

It should be noted that the foregoing plurality of embodiments may be combined, and a combined solution is implemented. Optionally, some operations in procedures of the foregoing method embodiments are randomly combined, and/or a sequence of some operations is randomly changed. In addition, an execution sequence of steps of each procedure is merely an example, and does not constitute a limitation on an execution sequence of the steps. The steps may be performed in another execution sequence. This is not intended to indicate that the execution sequence is the only sequence in which these operations can be performed. A person of ordinary skill in the art may figure out a plurality of manners to reorder the operations described in this specification. In addition, it should be noted that process details related to a specific embodiment in this specification are also applicable to another embodiment in a similar manner, or different embodiments may be used in combination.

It may be understood that, to implement functions in the foregoing embodiments, the base station and the terminal include corresponding hardware structures and/or software modules for performing various functions. A person skilled in the art should be easily aware that, in embodiments of this application, the units and method steps in the examples described with reference to embodiments disclosed in embodiments of this application can be implemented by hardware or a combination of hardware and computer software. Whether a function is performed by hardware or hardware driven by computer software depends on particular application scenarios and design constraints of the technical solutions.

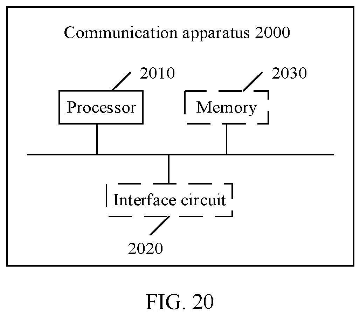

FIG. 19 and FIG. 20 are diagrams of structures of possible communication apparatuses according to embodiments of this application. These communication apparatuses may be configured to implement functions of any possible transmitter in the foregoing method embodiments. Therefore, beneficial effects of the foregoing method embodiments can also be implemented. In embodiments of this application, the communication apparatus may be a transmitter, or may be a module used in the transmitter, for example, a chip.

As shown in FIG. 19, the communication apparatus 1900 includes a processing unit 1910.

In a possible implementation, the communication apparatus 1900 may further include a transceiver unit 1920.

In a possible implementation, the communication apparatus 1900 may further include a storage unit 1930.

In a possible implementation, the communication apparatus 1900 may further include a transceiver unit 1920 and a storage unit 1930.

The communication apparatus 1900 is configured to implement functions of any node in the method embodiments shown in FIG. 7, FIG. 15, FIG. 17, and FIG. 18.

When the communication apparatus 1900 is configured to implement the functions of the first function entity in the method embodiment shown in FIG. 7, the transceiver unit 1920 is configured to obtain a first QoS parameter and a second QoS parameter; the processing unit 1910 is configured to obtain a new second QoS parameter based on the first QoS parameter and the second QoS parameter; the processing unit 1910 is further configured to: perform all operations performed by the communication apparatus 1900 except receiving and sending operations in the embodiment shown in FIG. 7, and/or support another process of the technology described in this specification; and the storage unit 1930 is configured to store any data, computer instructions, and/or a computer program that may be involved in embodiments of this application.

When the communication apparatus 1900 is configured to implement the functions of the third function entity in the method embodiment shown in FIG. 7, the transceiver unit 1920 is configured to receive a new second QoS parameter from a first function entity; the processing unit 1910 is configured to perform a first operation based on the new second QoS parameter; the processing unit 1910 is further configured to: perform all operations performed by the communication apparatus 1900 except receiving and sending operations in the embodiment shown in FIG. 7, and/or support another process of the technology described in this specification; and the storage unit 1930 is configured to store any data, computer instructions, and/or a computer program that may be involved in embodiments of this application.

When the communication apparatus 1900 is configured to implement the functions of the second function entity in the method embodiment shown in FIG. 15, the transceiver unit 1920 is configured to receive second information; the processing unit 1910 is configured to configure a communication resource of the second function entity based on a first QoS parameter; the processing unit 1910 is further configured to: perform all operations performed by the communication apparatus 1900 except receiving and sending operations in the embodiment shown in FIG. 15, and/or support another process of the technology described in this specification; and the storage unit 1930 is configured to store any data, computer instructions, and/or a computer program that may be involved in embodiments of this application.

For more detailed descriptions of the processing unit 1910 and the transceiver unit 1920, refer to related descriptions in the method embodiments shown in FIG. 7, FIG. 15, FIG. 17, and FIG. 18. The processing unit 1910 and the transceiver unit 1920 may further perform another step. For a specific implementation, refer to the method embodiments. Details are not described herein again.

Optionally, the transceiver unit 1920 may be a transceiver. The transceiver may include an antenna, a radio frequency circuit, and the like.

The processing unit 1910 may be a processor (or a processing circuit), for example, a baseband processor. The baseband processor may include one or more CPUs.

As shown in FIG. 20, the communication apparatus 2000 includes at least one processor 2010. In a possible implementation, the communication apparatus 2000 may further include an interface circuit 2020.

In a possible implementation, the communication apparatus 2000 may further include a memory 2030.

In a possible implementation, the communication apparatus 2000 may further include a memory 2030 and an interface circuit 2020.

In some embodiments, the processor 2010 and the memory 2030 are coupled to each other; and/or the processor 2010 and the interface circuit 2020 are coupled to each other. It may be understood that the interface circuit 2020 may be a transceiver or an input/output interface. The memory 2030 may be configured to: store computer instructions to be executed by the processor 2010, store input data needed for running the computer instructions by the processor 2010, or store data generated after the processor 2010 runs the computer instructions.

When the communication apparatus 2000 is configured to implement the methods shown in FIG. 7, FIG. 15, FIG. 17, and FIG. 18, the processor 2010 may be configured to implement a function of the processing unit 1910, and/or the interface circuit 2020 may be configured to implement a function of the transceiver unit 1920, and/or the memory 2030 may be configured to implement a function of the storage unit 1930.

The communication apparatus shown in FIG. 19 or FIG. 20 is merely an example. In an actual application, the communication apparatus may have more or fewer components than those shown in FIG. 19 or FIG. 20, may combine two or more components, or may have different component configurations.

In embodiments of this application, that an entity A sends information to an entity B may be that A directly sends the information to B, or may be that A indirectly sends the information to B via another entity. Similarly, that the entity B receives information from the entity A may be that the entity B directly receives the information sent by the entity A, or may be that the entity B indirectly receives the information sent by the entity A via another entity. The entities A and B herein each may be a RAN node or a terminal, or may be a module in a RAN node or a terminal. Information sending and receiving may be information exchange between a RAN node and a terminal, for example, information exchange between a network device and a terminal. Alternatively, information sending and receiving may be information exchange between two RAN nodes, for example, information exchange between a CU and a DU. Alternatively, information sending and receiving may be information exchange between different modules in an apparatus, for example, information exchange between a chip in a terminal and another module in the terminal, or information exchange between a chip in a network device and another module in the network device.

In embodiments of this application, the network device sends a downlink signal or downlink information to the terminal device, where the downlink information is carried on a downlink channel; and the terminal device sends an uplink signal or uplink information to the network device, where the uplink information is carried on an uplink channel. The terminal device needs to establish a wireless connection to a cell controlled by the network device, to communicate with the network device. The cell that establishes the wireless connection to the terminal device is referred to as a serving cell of the terminal device.

It may be understood that, in embodiments of this application, a physical downlink shared channel (physical downlink shared channel, PDSCH) and a physical uplink shared channel (physical uplink shared channel, PUSCH) are merely examples of a downlink data channel and an uplink data channel. In different systems and different scenarios, the data channel and the control channel may have different names. This is not limited in embodiments of this application.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Alternatively, the storage medium may be a component of the processor. The processor and the storage medium may be disposed in an ASIC. In addition, the ASIC may be located in the network device or the terminal. Alternatively, the processor and the storage medium may exist in a network device or a terminal as discrete components.

All or a part of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise specified or a logical conflict occurs, terms and/or descriptions between different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method is applied to a first function entity, and comprises:
obtaining a first quality of service QoS parameter and a second QoS parameter, wherein the first QoS parameter indicates a QoS requirement corresponding to a communication link between two communicatively connected second function entities of different types, and the second QoS parameter indicates a QoS requirement of a service; and
obtaining a new second QoS parameter based on the first QoS parameter and the second QoS parameter.

2. The method according to claim 1, wherein the first QoS parameter is obtained in at least one of the following manners:
determining, based on a first correspondence and a target policy, the first QoS parameter corresponding to the target policy, wherein the first correspondence indicates an association relationship between the first QoS parameter and a candidate function split manner, the candidate function split manner is a communication function split manner of the two communicatively connected second function entities of different types, the candidate function split manner comprises a target function split manner, and the target function split manner has an association relationship with the target policy; or
obtaining the first QoS parameter based on first information, wherein the first information indicates a network communication status corresponding to a first interface, and the first interface is a communication interface between the two communicatively connected second function entities of different types.

3. The method according to claim 1 or 2, wherein the first function entity is integrated into the second function entity.

4. The method according to claim 3, wherein the first function entity is integrated into a central unit CU, and the method further comprises:
initiating a data radio bearer establishment process based on the new second QoS parameter.

5. The method according to claim 1 or 2, wherein the first function entity and the second function entity are function entities that are independent of each other.

6. The method according to claim 5, wherein the first function entity and a CU are independent of each other, and the method further comprises:
sending the new second QoS parameter to the CU or a core network function network element.

7. The method according to any one of claims 1 to 6, wherein the second function entity is a function entity in a radio access network RAN, a core network, or a network management domain.

8. The method according to claim 7, wherein the second function entity is the function entity in the RAN, and the second function entity comprises at least one of the following function entities:
a CU,
a distributed unit DU, or
a radio unit RU.

9. The method according to any one of claims 1 to 8, wherein the method further comprises:
sending second information, wherein the second information indicates the first QoS parameter.

10. The method according to claim 9, wherein the second information is the first QoS parameter, or the second information is information indicating the target function split manner; and the candidate function split manner comprises the target function split manner, and the candidate function split manner is the communication function split manner of the two communicatively connected second function entities of different types.

11. The method according to claim 10, wherein the second information is information indicating the target policy, and the method further comprises:
sending at least one candidate function split manner and the first QoS parameter corresponding to the candidate function split manner.

12. The method according to claim 2, wherein the method further comprises:
determining the target policy based on one or more of the first information corresponding to the first interface, fourth information, and third information corresponding to the second function entity, wherein the third information indicates a processing resource status corresponding to the second function entity, and the fourth information indicates a second QoS parameter corresponding to at least one service.

13. The method according to claim 2 or 12, wherein the two second function entities of different types corresponding to the first interface comprise a first target entity and a second target entity, and the method further comprises:
obtaining the first information from the second function entity, wherein
the first information comprises at least one of the following parameters:
a bandwidth resource of the first interface,
a transmission delay of the first interface,
a packet loss rate of the first interface,
reliability of the first interface,
an internal processing delay of the first target entity, or
an internal processing delay of the second target entity.

14. The method according to claim 12, wherein the method further comprises:
obtaining the third information from the second function entity, wherein
the third information comprises at least one of the following parameters:
processor utilization,
memory utilization, or
disk utilization.

15. The method according to claim 12, wherein the method further comprises:
obtaining the fourth information from the second function entity and/or a core network device, wherein
the fourth information comprises at least one of the following parameters:
a packet delay budget PDB,
a guaranteed bit rate GBR, or
a packet error rate PER.

16. A communication method, wherein the method is applied to a third function entity, and comprises:
receiving a new second quality of service QoS parameter from a first function entity, wherein the new second QoS parameter is obtained based on a first QoS parameter and a second QoS parameter, the first QoS parameter indicates a QoS requirement corresponding to a communication link between two communicatively connected second function entities of different types, and the second QoS parameter indicates a QoS requirement of a service; and
performing a first operation based on the new second QoS parameter, wherein
the first operation comprises any one of the following:
establishing a data radio bearer; or
sending the new second QoS parameter.

17. The method according to claim 16, wherein the third function entity is a central unit CU, and receiving the new second QoS parameter from the first function entity comprises:
receiving the new second QoS parameter sent by the first function entity; or
receiving the new second QoS parameter forwarded by a core network element.

18. The method according to claim 17, wherein performing the first operation based on the new second QoS parameter comprises: establishing the data radio bearer based on the new second QoS parameter.

19. The method according to claim 16, wherein the third function entity is a core network element, and receiving the new second QoS parameter from the first function entity comprises:
receiving the new second QoS parameter sent by the first function entity.

20. The method according to claim 19, wherein performing the first operation based on the new second QoS parameter comprises: sending the new second QoS parameter.

21. The method according to any one of claims 16 to 20, wherein the first QoS parameter is obtained in at least one of the following manners:
determining, based on a first correspondence and a target policy, the first QoS parameter corresponding to the target policy, wherein the first correspondence indicates an association relationship between the first QoS parameter and a candidate function split manner, the candidate function split manner is a communication function split manner of the two communicatively connected second function entities of different types, the candidate function split manner comprises a target function split manner, and the target function split manner has an association relationship with the target policy; or
obtaining the first QoS parameter based on first information, wherein the first information indicates a network communication status corresponding to a first interface, and the first interface is a communication interface between the two communicatively connected second function entities of different types.

22. The method according to any one of claims 16 to 21, wherein the first function entity is integrated into the second function entity.

23. The method according to any one of claims 16 to 21, wherein the first function entity and the second function entity are function entities that are independent of each other.

24. The method according to any one of claims 16 to 23, wherein the second function entity is a function entity in a radio access network RAN, a core network, or a network management domain.

25. The method according to claim 24, wherein the second function entity is the function entity in the RAN, and the second function entity comprises at least one of the following function entities:
a CU,
a distributed unit DU, or
a radio unit RU.

26. The method according to claim 24, wherein the second function entity and the third function entity are a same function entity.

27. A communication method, wherein the method is applied to a second function entity, and comprises:
receiving second information, wherein the second information indicates a first quality of service QoS parameter, and the first QoS parameter indicates a QoS requirement corresponding to a communication link between two communicatively connected second function entities of different types; and
configuring a communication resource of the second function entity based on the first QoS parameter, wherein a service transmitted on the communication resource corresponds to a second QoS parameter, and the first QoS parameter is further used to obtain a new second QoS parameter via a first function entity based on the second QoS parameter.

28. A communication system, comprising a first function entity, a third function entity, and a core network element, wherein
the first function entity is configured to obtain a first quality of service QoS parameter, wherein the first QoS parameter indicates a QoS requirement corresponding to a communication link between two communicatively connected second function entities of different types;
the core network element is configured to send a second QoS parameter to the first function entity, wherein the second QoS parameter indicates a QoS requirement of a service;
the first function entity is further configured to obtain a new second QoS parameter based on the first QoS parameter and the second QoS parameter; and
the first function entity is integrated into the third function entity, and the third function entity is configured to perform a first operation based on the new second QoS parameter; or
the first function entity and the third function entity are independently deployed, the first function entity is further configured to send the new second QoS parameter to the third function entity, and the third function entity is further configured to perform the first operation based on the new second QoS parameter, wherein
the first operation comprises any one of the following:
establishing a data radio bearer; or
sending the new second QoS parameter.

29. The system according to claim 28, wherein the system further comprises a second function entity;
the first function entity is further configured to send second information to the second function entity, wherein the second information indicates the first quality of service QoS parameter; and
the second function entity is configured to configure a communication resource of the second function entity based on the first QoS parameter.

30. A communication apparatus, comprising a processing module and a communication module, wherein
the communication module is configured to: receive and/or send a signal, and the processing module is configured to enable the method according to any one of claims 1 to 15 to be performed, the processing module is configured to enable the method according to any one of claims 16 to 26 to be performed, or the processing module is configured to enable the method according to claim 27 to be performed.

31. A communication apparatus, comprising at least one processor and a communication interface, wherein the communication interface is configured to: receive and/or send a signal, and the processor is configured to enable the method according to any one of claims 1 to 15 to be performed, the processor is configured to enable the method according to any one of claims 16 to 26 to be performed, or the processor is configured to enable the method according to claim 27 to be performed.

32. A communication apparatus, comprising at least one processor and a memory, wherein the memory is configured to store computer instructions, and the processor is configured to execute the computer instructions, to enable the communication apparatus to perform the method according to any one of claims 1 to 15, enable the communication apparatus to perform the method according to any one of claims 16 to 26, or enable the communication apparatus to perform the method according to claim 27.

33. A computer-readable storage medium, wherein the computer-readable storage medium stores instructions or a program, and when the instructions or the program runs on a communication apparatus, the communication apparatus is enabled to perform the method according to any one of claims 1 to 15, the communication apparatus is enabled to perform the method according to any one of claims 16 to 26, or the communication apparatus is enabled to perform the method according to claim 27.

34. A computer program product, wherein the computer program product comprises a computer program or instructions, and when the computer program or the instructions are run on a computer, the computer is enabled to perform the method according to any one of claims 1 to 15, the computer is enabled to perform the method according to any one of claims 16 to 26, or the computer is enabled to perform the method according to claim 27.
